(19) Europäisches Patentamt
European Patent Office
Office européen des brevets

(11) **EP 2 290 839 A1**

(12) **EUROPEAN PATENT APPLICATION**
published in accordance with Art. 153(4) EPC

(43) Date of publication:
**02.03.2011 Bulletin 2011/09**

(51) Int Cl.:
*H04B 7/15* (2006.01)     *H04B 7/02* (2006.01)
*H04B 7/06* (2006.01)     *H04B 7/12* (2006.01)
*H04J 1/00* (2006.01)     *H04J 3/00* (2006.01)
*H04J 11/00* (2006.01)    *H04W 16/26* (2009.01)
*H04W 72/04* (2009.01)

(21) Application number: 09766727.3

(22) Date of filing: **19.06.2009**

(86) International application number:
**PCT/JP2009/061237**

(87) International publication number:
**WO 2009/154279 (23.12.2009 Gazette 2009/52)**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**
Designated Extension States:
**AL BA RS**

(30) Priority: **20.06.2008 JP 2008162493**

(71) Applicant: **Mitsubishi Electric Corporation
Tokyo 100-8310 (JP)**

(72) Inventors:
• **HARA, Yoshitaka
Tokyo 100-8310 (JP)**
• **YAMAOKA, Tomoya
Tokyo 100-8310 (JP)**

(74) Representative: **Pfenning, Meinig & Partner GbR
Patent- und Rechtsanwälte
Theresienhöhe 13
80339 München (DE)**

(54) **COMMUNICATION DEVICE AND WIRELESS COMMUNICATION SYSTEM**

(57)     A communication apparatus constitutes a wireless communication system with a base station and a terminal station, and relays and transfers a signal transmitted and received between the base station and the terminal station. The communication apparatus uses a frequency different from that at a time of reception to amplify and transfer the received signal, when having received a signal transmitted from the base station or the terminal station.

## FIG.1

**Description**

TECHNICAL FIELD

The present invention relates to a communication apparatus positioned between a base station and a terminal, for example, to relay and transmit signals transmitted from the base station and the terminal to a reception side, and to a wireless communication system including the communication apparatus.

BACKGROUND ART

In recent high-speed wireless communication systems, a large transmission power has been required along with increasingly higher transmission speed. However, in practice, there is a limitation in the transmission power of a transmitter, and a technique that can ensure a cover area with the limited transmission power has been desired. Recently, to meet such a demand, relay transmission has commanded attention as the solution. In relay transmission, a signal from a transmitter is amplified by a relay apparatus and transmitted to a receiver. When relay transmission is performed, the transmission power of the transmitter can be reduced more than a case that the transmitter directly transmits a signal to the receiver. Therefore, relay transmission has been expected as a technique that can solve a coverage problem in an environment having a limitation in the transmission power of the transmitter.

In conventional relay transmission, such a method is generally used that, after a relay apparatus has received a signal, a received signal is relayed and transmitted in the next time slot with the same frequency. Such a conventional relay transmission technique is described in Nonpatent literature 1 mentioned below, for example. The conventional relay transmission technique is explained below.

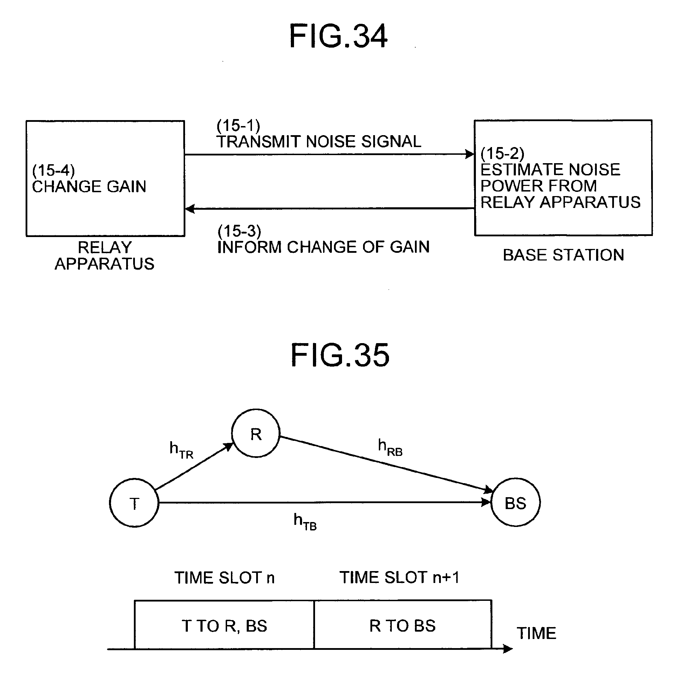

FIG. 35 is an explanatory diagram of the conventional relay transmission, and more specifically, FIG. 35 depicts a configuration of a relay transmission channel and a time slot for transmitting a signal. In FIG. 35, "T" denotes a terminal (corresponding to a transmitter), "R" denotes a relay apparatus that performs relay transmission, and "BS" denotes a base station (corresponding to a receiver). As shown in FIG. 35, in conventional relay transmission, the terminal T transmits a signal in a first time slot n, and the signal transmitted from the terminal T is received by the base station BS and the relay apparatus R. The relay apparatus R amplifies the received signal to G times the power and relays and transmits the amplified signal to the base station BS with transmission power $P_R$ in a next (second) time slot n+1. The base station BS synthesizes the signals received in the first and second time slots (the signal directly received from the terminal T and the signal relayed and transmitted by the relay apparatus R), thereby improving the signal quality.

When it is assumed that a complex propagation gain from the terminal T to the base station BS, from the terminal T to the relay apparatus R, and from the relay apparatus R to the base station BS are, respectively, $h_{TB}$, $h_{TR}$, and $h_{RB}$, and the terminal T transmits the qth symbol s(q) ($E[|s(q)|^2]$=1) with power $P_T$, received signals $x_1(q)$ and $x_2(q)$ corresponding to the qth symbol in the first and second time slots in the base station are given in the following equations.

[Equation 1]

$$x_1(q) = h_{TB}\sqrt{P_T}\,s(q) + n_1(q)$$

$$x_2(q) = h_{RB}\sqrt{G}(h_{TR}\sqrt{P_T}\,s(q) + n_R(q)) + n_2(q)$$

In the above equation, G denotes a gain in the relay apparatus R, $n_1(q)$ and $n_2(q)$ respectively denote noise components in the first and second time slots in the base station BS and have the same noise power $N_{BS}$ ($=E[|n_2(q)|^2]$ $=E[|n_1(q)|^2]$). Further, $n_R(q)$ denotes a noise component in the relay apparatus R, and has a noise power $N_R$ ($=E[|n_R(q)|^2]$).

The base station BS ascertains a pattern of a pilot signal included in the signal s(q) beforehand, and can calculate a maximum ratio combining weight of $x_1(q)$ and $x_2(q)$. A received-signal power to noise-plus interference power ratio (a reception SINR) $\Gamma$ after the maximum ratio combining is given by the following equation.

[Equation 2]

$$\Gamma = \frac{P_T \left| h_{TB} \right|^2}{N_{BS}} + \frac{G \left| h_{TR} h_{RB} \right|^2}{G \left| h_{RB} \right|^2 N_R + N_{BS}}$$

Further, the gain G when the relay apparatus R amplifies the received signal to the transmission power $P_R$ is expressed by the following equation.

[Equation 3]

$$G = \frac{P_R}{P_T \left| h_{TR} \right|^2 + N_R}$$

A data symbol and a pilot symbol are included in the signal s(q) in a packet received from the terminal T; however, when the transmission power of the data symbol and that of the pilot symbol are different, the transmission power $P_T$ becomes an average transmission power per symbol.

The base station BS can acquire the reception SINR $\Gamma$ by performing maximum ratio combining of a plurality of received signals. In this manner, in conventional relay transmission, after a relay channel is determined, the signal passes through many channels, where the signal undergoes fading variation, thereby acquiring a diversity effect.

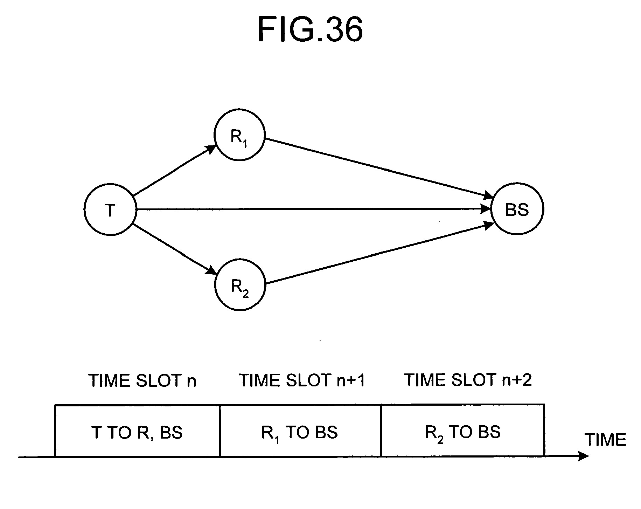

In Nonpatent literature 2 mentioned below, relay transmission performed by using a plurality of relay apparatuses ($R_1$ and $R_2$) as shown in FIG. 36 is disclosed.

PRIOR ART DOCUMENTS

NONPATENT LITERATURES

Nonpatent literature 1: J. Laneman, D. Tse, and G. Wornell, "Cooperative diversity in wireless networks: efficient protocols and outage behavior", IEEE Trans. Inform. Theory, vol. 50, pp.3062-3080, Dec. 2004.
Nonpatent literature 2: Dongwoo Lee, Young Seok Jung, and Jae Hong Lee "Amplify-and-Forward Cooperative Transmission with Multiple Relays Using Phase Feedback", IEEE Proc. of Vehicluar Technology Conference, VTC-2006 Fall. Sept. 2006.

DISCLOSURE OF INVENTION

PROBLEM TO BE SOLVED BY THE INVENTION

As described above, in conventional relay transmission, the relay apparatus transmits received signals in subsequent time slots with the same frequency. In this case, because positions of the terminal and the relay apparatus are largely different, an interference power level received by an adjacent cell largely varies for each time slot. As a result, interference power measured by the base station in the adjacent cell is not stabilized, and frequency resource management such as frequency allocation is hard to be performed in the adjacent cell.

Further, the terminal cannot transmit data continuously in continuous time slots with the same frequency. Therefore, there is a problem in that the terminal cannot continuously use a frequency having a favorable propagation state, thereby decreasing data transmission speed. There is another problem in that control becomes complicated because transmission and suspension control is required for each time slot.

In a wireless communication system based on a cellular configuration, a specific frequency is repeatedly used with a certain cell interval. At this time, it is important to increase repeated use of frequency as much as possible. In signal transmission from a wireless device close to the base station, because the transmission power is low and there is little interference to other cells, a frequency can be allocated with a small frequency reuse factor. The frequency reuse factor indicates how many cells use a specific frequency once (a repetitive frequency of the same frequency). When the frequency reuse factor is assumed to be U, for example, when the same frequency is used by all cells, U=1, and when the same frequency is used by four cells (one of four frequencies is uniformly allocated to each cell), U=4. Because the positions of the terminal and the relay apparatus are largely different, it is desired in view of the frequency use efficiency that a different frequency reuse factor is applied respectively. However, in conventional relay transmission, because the terminal T and the relay apparatus use the same frequency, it has been difficult to set a different frequency reuse factor to wireless resources used by the terminal T and the relay apparatus R. As a result, sufficiently efficient frequency management cannot be performed.

Further, in conventional relay transmission, there is such a configuration that a plurality of relay apparatuses respectively transmit a received signal in continuous time slots with the same frequency. In this case, many time slots are required for signal transmission from the relay apparatuses, and a long delay occurs in one data transmission. Further, the time slot that can be used for signal transmission by the terminal decreases, and support with high data transmission efficiency becomes difficult.

In the conventional data transmission, further, one terminal transmits a data signal in a time slot in a specific frequency, and the relay apparatus transmits the received signal in the next time slot. However, because many time slots are used for one data transmission, favorable frequency use efficiency cannot be always obtained. Therefore, there has been desired to provide a configuration in which relay transmission can be performed more efficiently.

Further, in the current mobile communication system, normalization of an Orthogonal Frequency Division Multiple Access (OFDMA) system including a scheduling function has been widely performed. A configuration that can apply the scheduling function in the relay transmission has been desired without requiring a large change in an interface of the current standards. However, in the conventional relay transmission technique, compliance to the conventional standards has not been taken into consideration sufficiently.

The present invention has been achieved to solve the above problems, and an object of the present invention is to provide a communication apparatus and a wireless communication system that can realize communication in which frequency use efficiency and data transmission efficiency in a system are improved.

In addition, another object of the present invention is to provide a communication apparatus and a wireless communication system that realize simplification of frequency management and transmission control and can be easily applied to existing systems.

MEANS FOR SOLVING PROBLEM

To solve the problems as described above, and to achieve the object, there is provided a communication apparatus that constitutes a wireless communication system with a base station and a terminal station, and relays and transfers a signal transmitted and received between the base station and the terminal station, wherein when having received a signal transmitted from the base station or the terminal station, the communication apparatus uses a frequency different from that at a time of reception to amplify and transfer the received signal.

EFFECT OF THE INVENTION

According to the present invention, because the frequency for the relay apparatus and the frequency for the terminal can be separately managed in the base station, frequency management can be performed efficiently. As a result, frequency use efficiency in a system can be improved and data transmission efficiency can be improved.

BRIEF DESCRIPTION OF DRAWINGS

FIG. 1 depicts a configuration example of a wireless communication system and a basic signal transmission operation in a first embodiment.
FIG. 2 is an example of a relation between a timing of signal transmission performed by a terminal and a relay apparatus according to the first embodiment and wireless resources to be used.
FIG. 3 is a flowchart of a basic procedure of communication control in the wireless communication system according to the first embodiment.
FIG. 4 is a configuration example of the relay apparatus according to the first embodiment.
FIG. 5 is an example of a signal transmission operation in the wireless communication system in which relay transmission according to the first embodiment is applied.
FIG. 6 is an example of a signal transmission operation in the wireless communication system in which relay transmission according to the first embodiment is applied.
FIG. 7 depicts a configuration example of a wireless communication system and a basic signal transmission operation in a second embodiment.

FIG. 8 is an example of relay transmission in the second embodiment.

FIG. 9 is an example of relay transmission in a third embodiment.

FIG. 10 is an example of a method of allocating a frequency to be used for signal transmission by a terminal and a relay apparatus in relay transmission in a fourth embodiment.

FIG. 11 is an example of a time slot used by the terminal and the relay apparatus according to the fourth embodiment.

FIG. 12 is an example of a case that a frequency reuse factor different between a frequency band used by a terminal and a frequency band used by a relay apparatus is set in a cellular environment.

FIG. 13 is a configuration example of a subband used in a fifth embodiment.

FIG. 14 is an example of subband mapping used in a wireless communication system according to the fifth embodiment.

FIG. 15 is an example of subband mapping used in the wireless communication system according to the fifth embodiment.

FIG. 16 is an example of subband mapping used in the wireless communication system according to the fifth embodiment.

FIG. 17 is an example of subband mapping used in the wireless communication system according to the fifth embodiment.

FIG. 18 is an example of a signal transmission operation by a terminal and a relay apparatus in a wireless communication system according to a sixth embodiment.

FIG. 19 is a conceptual diagram of scheduling in the sixth embodiment.

FIG. 20 depicts a configuration of a wireless communication system and an example of a relay transmission operation in an eighth embodiment.

FIG. 21 is an example of a relation between a timing of signal transmission performed by respective terminals and respective relay apparatuses in the wireless communication system according to the eighth embodiment and wireless resources to be used.

FIG. 22 is an example of a relation between a timing of signal transmission performed by respective terminals and respective relay apparatuses in the wireless communication system according to the eighth embodiment and wireless resources to be used.

FIG. 23 is an example of a relay transmission operation (multi-user relay transmission) in a ninth embodiment.

FIG. 24 is an example of a relay transmission operation (multi-user relay transmission) in the ninth embodiment.

FIG. 25 is an example of a relay transmission operation (multi-user relay transmission) in the ninth embodiment.

FIG. 26 is an example of a relation between a timing of signal transmission performed by a terminal and a relay apparatus in a wireless communication system according to a tenth embodiment and wireless resources to be used.

FIG. 27 is a mode of conventional relay transmission.

FIG. 28 is an example of multi-user relay transmission, which is a mode of relay transmission according to the present invention.

FIG. 29 is an example of relay transmission in a thirteenth embodiment.

FIG. 30 depicts a synthesizing operation of received signals in a relay apparatus according to the thirteenth embodiment.

FIG. 31 depicts a synthesizing method of received signals in the relay apparatus according to the thirteenth embodiment.

FIG. 32 is an example of relay transmission in a fourteenth embodiment.

FIG. 33 is an example of a signal transmission operation in a wireless communication system in which relay transmission in the fourteenth embodiment is applied.

FIG. 34 depicts a control flow operation of a gain G.

FIG. 35 depicts a conventional relay transmission.

FIG. 36 depicts a conventional relay transmission.

BEST MODE(S) FOR CARRYING OUT THE INVENTION

Exemplary embodiments of a communication apparatus according to the present invention will be explained below in detail with reference to the accompanying drawings. In the following embodiments, a signal transmission operation for realizing a highly efficient relay transmission method, using multicarrier transmission or an OFDMA system as a base is explained. In the following explanations of respective embodiments, there is assumed application to an uplink, and a communication apparatus on a transmission side of an information signal is referred to as "terminal T", a communication apparatus on a reception side is referred to as "base station BS", and a communication apparatus (a communication apparatus according to the present invention) that relays (relays and transmits) a signal transmitted from the terminal T to the base station BS is referred to as "relay apparatus R". The respective embodiments are only examples, and techniques explained in these embodiments can be similarly applied to a downlink or a distributed wireless communication system. That is, the present invention is not limited to the embodiments.

First embodiment.

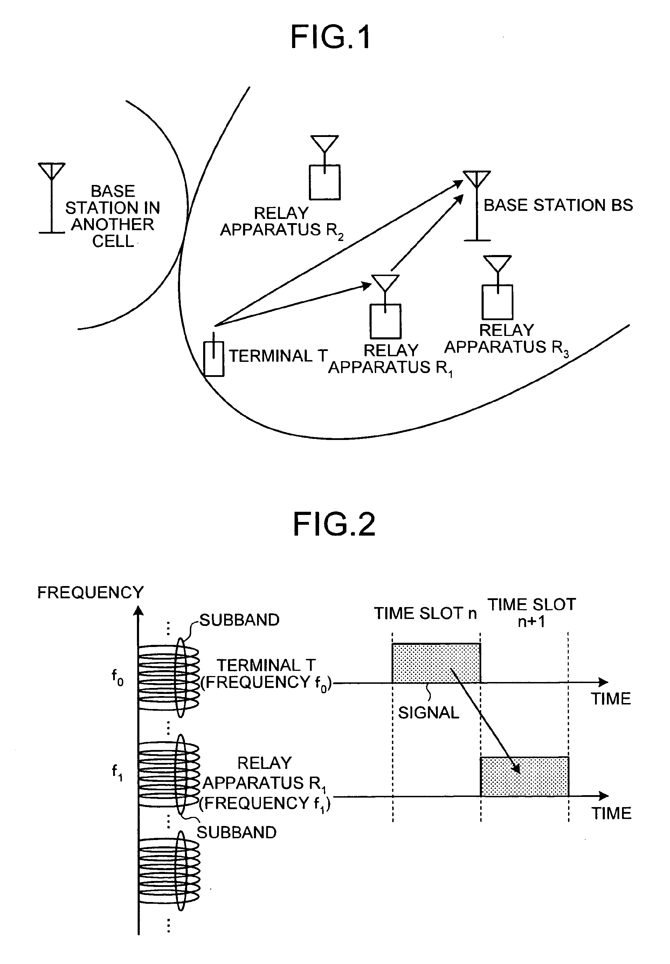

FIG. 1 depicts a configuration example of a wireless communication system and a basic signal transmission operation in a first embodiment of the present invention. The wireless communication system shown in FIG. 1 includes the terminal T, which is a communication apparatus on the transmission side, the base station BS, which is a communication apparatus on the reception side, and a plurality of relay apparatuses R (relay apparatuses $R_1$, $R_2$, and $R_3$) that relay and transmit a signal transmitted from the terminal T to the base station BS. The terminal T and the respective relay apparatuses R can be any of a mobile terminal, a terminal connected to a power source at all times, and a personal computer, so long as it is a wireless device. FIG. 1 depicts a case that the relay apparatus $R_1$ relays and transmits a signal transmitted from the terminal T.

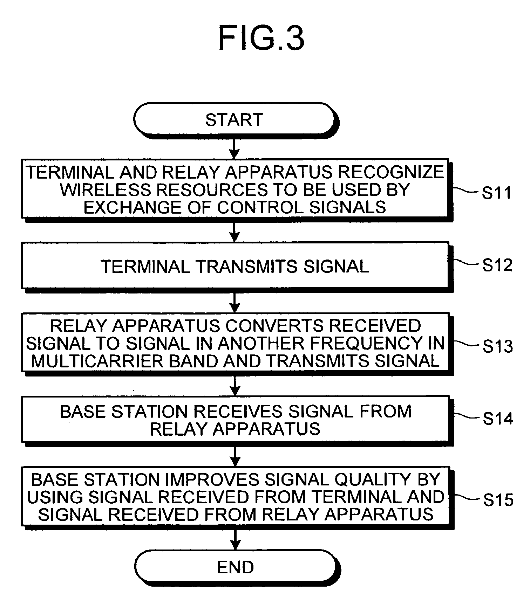

FIG. 2 is an example of a relation between a timing of signal transmission performed by the terminal T and the relay apparatus R in the wireless communication system according to the present embodiment and wireless resources to be used, and FIG. 3 is a flowchart of a control procedure of basic communication in the wireless communication system according to the present embodiment.

Relay transmission control in the present embodiment is explained with reference to FIGS. 1, 2, and 3. As shown in FIG. 1, in the present embodiment, the relay apparatus $R_1$ receives a signal transmitted from the terminal T once, and amplifies and transmits the signal to the base station BS; however, there is a characteristic in the use of frequency. Specifically, in the wireless communication system according to the present embodiment, as shown in FIG. 2, the terminal T transmits a signal by using a subband with a frequency $f_0$, and the relay apparatus $R_1$ amplifies and transmits a received signal with a frequency $f_1$ different from the frequency $f_0$ in the multicarrier transmission system such as the OFDMA system. Normally, the different frequencies $f_0$ and $f_1$ are realized by using different subcarriers in the multicarrier transmission system. In a more preferable mode, as shown in FIG. 2, amplification and transmission in the different frequencies $f_0$ and $f_1$ are realized by designating a plurality of subcarriers as one subband and transmitting a signal with a different subband by the terminal T and the relay apparatus $R_1$. While a case that the relay apparatus $R_1$ relays and transmits a signal is described here, the same applies to a case that other relay apparatuses ($R_2$ and $R_3$) relay and transmit a signal.

A control procedure for realizing such relay transmission is explained next with reference to the flowchart shown in FIG. 3.

1-1) At the time of starting relay transmission, in the terminal T, the respective relay apparatuses R, and the base station BS in the same cell, wireless resources (frequency and time slot) to be used are arranged. The arrangement is performed by exchange of control signals. The wireless resources to be used by the terminal T and the relay apparatus R are determined by the base station BS, and the base station BS transmits a control signal to the terminal T and the relay apparatus R to inform the determined wireless resources (Step S11 in FIG. 3).

1-2) The terminal T uses the time slot and frequency informed at Step S11 (the frequency $f_0$ in a time slot n in the example shown in FIG. 2) to transmit a signal, and the base station BS and the relay apparatus $R_1$ receive the signal (Step S12).

1-3) The relay apparatus $R_1$ converts the received signal with the frequency $f_0$ to another frequency (to a signal with the frequency informed from the base station BS at Step S11), and uses the time slot corresponding to the wireless resources informed at Step S11 (the time slot n+1 in the example shown in FIG. 2) to transfer the signal to the base station BS (Step S13). The frequency after conversion is a frequency according to an informed content at Step S11.

1-4) The base station BS receives the signal transferred (relayed and transmitted) by the relay apparatus $R_1$ (Step S14).

1-5) The base station BS synthesizes the signal directly received from the terminal T in the above procedure 1-2) and the received signal from the terminal T via the relay apparatus $R_1$ in the above procedure 1-4), thereby improving the quality of the received signal from the terminal T (Step S15).

In the above explanations, the time slot to be used by the relay apparatus $R_1$ is the next time slot of the one used by the terminal T; however, there can be any delay so long as it is a subsequent time slot of the time slot n used by the terminal (it may not be the next time slot of the time slot n, and can be a time slot n+2 or later). It is described as "subsequent time slot"; however, it can be "subsequent time symbol".

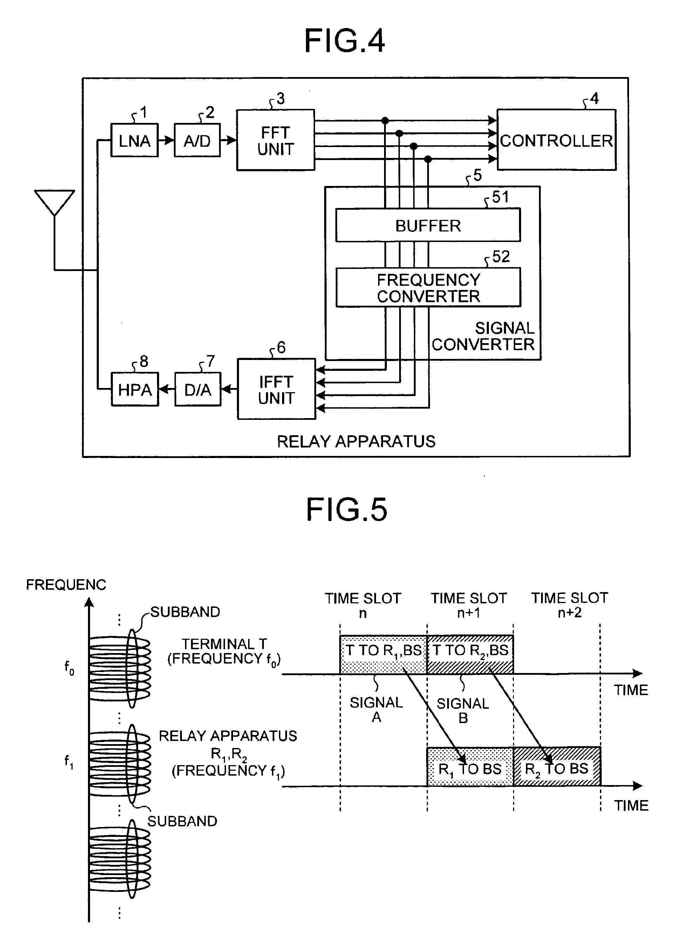

In the above procedure 1-3), any frequency conversion method can be used for converting the frequency of the received signal by the relay apparatus $R_1$. An example of a frequency conversion operation by the relay apparatus R in the present embodiment is explained with reference to FIG. 4.

FIG. 4 is a configuration example of the relay apparatus R according to the present embodiment. The relay apparatus R according to the present embodiment includes a low-noise amplifier (LNA) 1 that amplifies an analog signal received via an antenna, an AD converter (A/D) 2 that converts the analog signal after being amplified by the low-noise amplifier 1 to a digital signal, an FFT unit 3 that performs Fast Fourier Transform (FFT) with respect to the received signal after being converted to the digital signal, to convert the received signal to a signal in a frequency domain, a controller 4 that controls respective components of the relay apparatus, a signal converter 5 that performs frequency conversion with respect to the signal output from the FFT unit 3, an IFFT unit 6 that performs Inverse Fast Fourier Transform (IFFT) with respect to the signal output from the signal converter 5 to convert the signal to a signal in a time domain, a DA converter (D/A) 7 that converts the signal output from the IFFT unit 6 to an analog signal, and a high-power amplifier (HPA) 8 that amplifies the signal output from the DA converter 7. The signal converter 5 includes a buffer 51 for temporarily holding the signal output from the FFT unit 3, which is decomposed to components for each subcarrier, and a frequency converter 52 that reads the signal held in the buffer 51 at a predetermined timing and maps the signal in subcarriers of a transmission port per subcarrier according to a predetermined frequency conversion procedure.

In the process at Step S11, the relay apparatus R having the configuration described above receives a control signal from the base station BS by the controller 4, and ascertains the wireless resources (a relation between the frequency and the time slot) to be used in relay transmission.

In the process at Step S13, once after converting the received signal to a signal in a baseband, the FFT unit 3 performs the FFT to decompose the signal into components for each subcarrier, and stores the components in the buffer 51 that waits until the next time slot. Further, the frequency converter 52 maps the received signal in the subcarriers of the transmission port per subcarrier according to a predetermined frequency conversion method to perform frequency conversion. The IFFT unit 6 performs the IFFT to convert the received signal to a multicarrier signal, and transmits the acquired signal to the base station BS in a time slot specified by the base station BS (a predetermined time slot ascertained by the controller 4).

According to such a device configuration, the relay apparatus R can smoothly perform frequency conversion of the received signal, and transmit the acquired frequency-converted signal in the next time slot. On the other hand, the base station BS recognizes the frequency and the time slot in which a signal is transmitted from the terminal T and the relay apparatus R based on the preliminary arrangement (the process at Step S11). Therefore, the base station BS improves the signal quality by using the received signal from the terminal T and the received signal from the relay apparatus R (the signal received with a different frequency from that of the received signal from the terminal T).

As described above, when the configuration in which a signal is transmitted with a frequency being converted by the relay apparatus is applied, the base station can separately manage the frequency for the relay apparatus and the frequency for the terminal, and can efficiently perform frequency management. As a result, for example, a frequency band exclusive for the relay apparatus can be set. That is, in the multicarrier transmission system, it is a characteristic of the present invention to set the frequency band exclusive for the relay apparatus. When the relay transmission in the present embodiment is applied, a frequency reuse factor different between the frequency band for the terminal and the frequency band for the relay apparatus can be easily set. In a configuration in which signal transmission is performed per a plurality of subcarriers (subbands) instead of the subcarrier in the multicarrier transmission system, an amount of the control signal for specifying a subband can be suppressed. Further, signals can be densely multiplexed in adjacent subcarriers by multicarrier transmission, without separating other signals by an analog filter or the like, than the case that signals are separated by the analog filter. The configuration in which relay transmission is performed with the frequency being converted in the multicarrier transmission can be realized by the configuration shown in FIG. 4.

An example of a more preferable usage mode that can be realized by using the relay transmission (relay transmission with frequency conversion) described above is shown in FIG. 5. FIG. 5 is an example of a signal transmission operation in the wireless communication system in which relay transmission according to the first embodiment is applied. In the signal transmission operation shown in FIG. 5, a terminal T transmits signals in continuous time slots with the frequency $f_0$, and the two relay apparatuses R ($R_1$ and $R_2$) relay and transmit the signal transmitted from the terminal T in continuous time slots with the frequency $f_1$. At this time, the respective relay apparatuses alternately use the time slot. For example, the relay apparatus $R_1$ transmits the received signal in time slots n, n+2, n+4, ..., with the frequency $f_0$ toward the base station BS in time slots n+1, n+3, n+5, ..., with the frequency $f_1$ and the relay apparatus $R_2$ transmits the received signal with the frequency $f_0$ in the time slots n+1, n+3, n+5, ..., toward the base station BS in time slots n+2, n+4, n+6, ... with the frequency $f_1$. In this manner, if different relay apparatuses relay and transmit signals in alternate time slots, all signals transmitted by the terminal T in the continuous time slots can be relayed and transmitted. The configuration in which the terminal T continuously transmits a packet in one first frequency band and the relay apparatuses R alternately relay and transmit the packet in a second frequency band as shown in FIG. 5 is one of the characteristics of the present invention.

In the signal transmission operation shown in FIG. 5, because the terminal T can transmit signals in the continuous time slots, high data transmission speed can be achieved. When the terminal T has a favorable propagation (or fading) state in a specific frequency, it is better to use the frequency as much as possible. From this viewpoint, it can be said that the configuration for transmitting data in continuous time slots in a specific frequency is better. In addition, interference power received by an adjacent base station in a peripheral cell (for example, a base station in another cell shown in FIG. 1) is stabilized in each frequency. This is because in conventional relay transmission (relay transmission without frequency conversion), the interference power largely varies timewise depending on a difference in position of the terminal T and the relay apparatus R, because the terminal T and the relay apparatus R alternately use the time slot in a specific frequency. On the other hand, according to the method in the present embodiment, the frequency $f_0$ is used by the terminal T at all times to transmit signals, and thus the interference power in the adjacent base station is stabilized. Generally, further, the relay apparatuses $R_1$ and $R_2$ are present at positions close to the base station BS. That is, a distance between the relay apparatus and the adjacent base station is larger than that between the terminal T and the adjacent base station. Therefore, in the frequency $f_1$ used by the respective relay apparatuses R, the interference power observed in the adjacent base station can be stabilized further, as compared with a case that conventional relay transmission is applied.

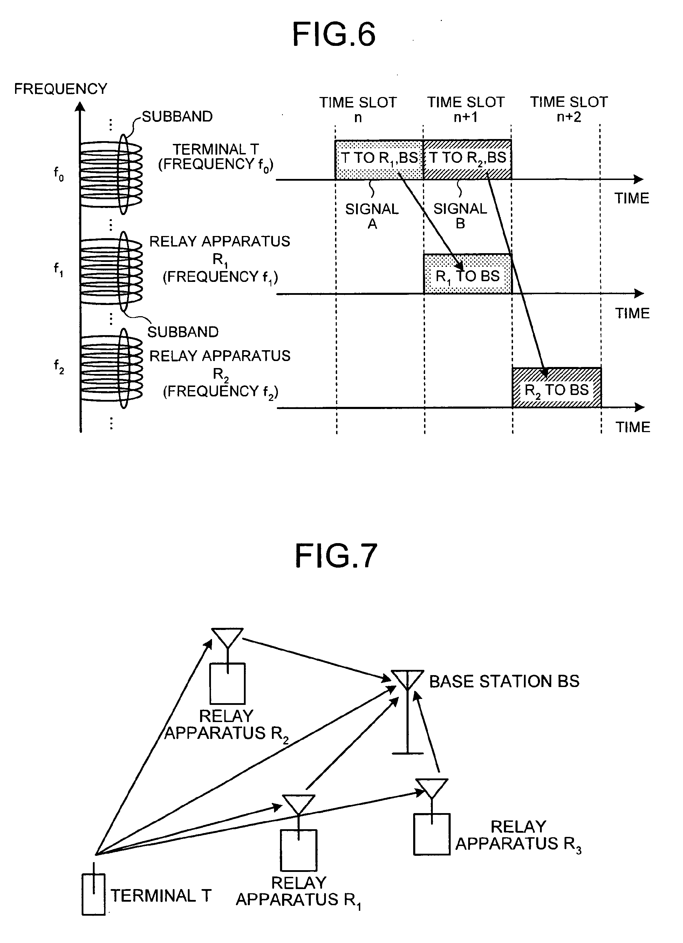

Further, a signal transmission operation shown in FIG. 6 can be also realized, other than the signal transmission operation shown in FIG. 5. FIG. 6 is an example of a signal transmission operation in the wireless communication system in which relay transmission according to the first embodiment is applied. In the operation shown in FIG. 6, the relay apparatuses $R_1$ and $R_2$ relay and transmit received signals by using different frequencies ($f_1$, $f_2$). In such a configuration, the terminal T can continuously transmit signals by using the frequency $f_0$.

In this manner, in the present embodiment, the relay apparatus converts the frequency (or subcarrier or subband) of the received signal from the terminal and transfers the signal to the base station with a frequency different from the frequency at the time of receiving the signal. Accordingly, the base station can separately manage the frequency for the relay apparatus and the frequency for the terminal, and can efficiently perform frequency management.

Further, the terminal can continuously transmit packets in one frequency band and the relay apparatuses R alternately relay and transmit the packets in other frequency bands, and as a result, transmission efficiency can be improved.


Second embodiment.

A second embodiment is explained next. In the first embodiment, relay transmission using a single relay apparatus has been mainly explained. However, in the present embodiment, relay transmission using a plurality of relay apparatuses is explained. The configuration of the respective relay apparatuses is the same as that of the relay apparatus (see FIG. 4) described in the first embodiment.

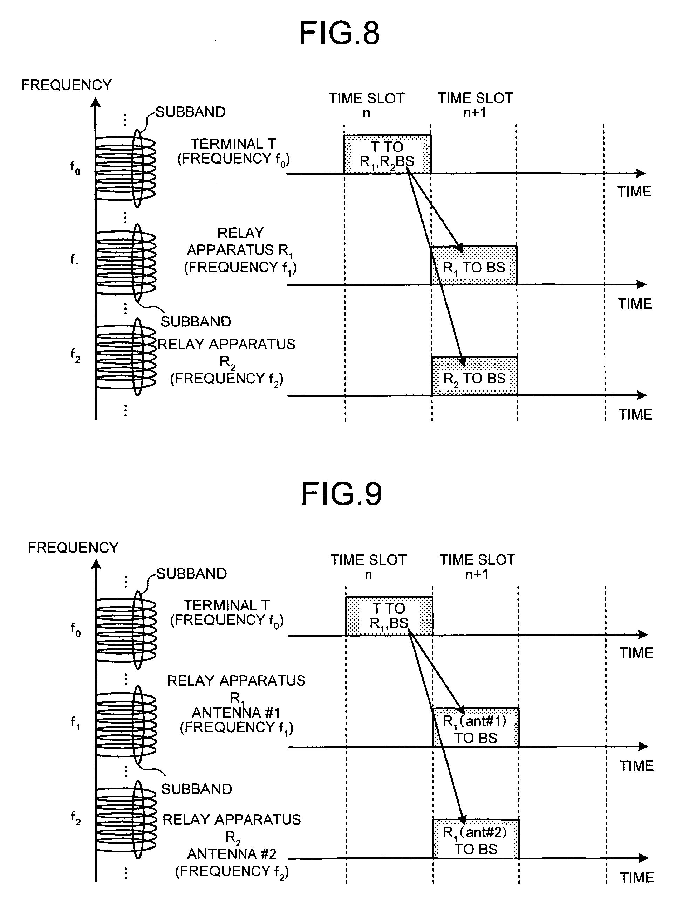

FIG. 7 is a configuration example of a wireless communication system and a basic signal transmission operation in the second embodiment. FIG. 8 depicts an example of relay transmission in the second embodiment, and more specifically, FIG. 8 depicts a signal transmission operation of the terminal T and the respective relay apparatuses R and wireless resources to be used at the time of the signal transmission operation. The configuration of the wireless communication system shown in FIG. 7 is the same as that in the first embodiment (see FIG. 1).

The relay transmission operation in the second embodiment is explained with reference to FIGS. 7 and 8. In the present embodiment, as shown in FIG. 7, a plurality of (two or more) the relay apparatuses R amplify and transmit (relay and transmit) signals received from the terminal T to the base station BS. At this time, as shown in FIG. 8, in the multicarrier transmission system such as the OFDMA system, the terminal T transmits a signal by using a subband within the frequency $f_0$, and the respective relay apparatuses R amplify and transmit the signal by using a subband within a frequency different from the frequency $f_0$. For example, the relay apparatus $R_1$ uses the frequency $f_1$ and the relay apparatus $R_2$ uses a frequency $f_2$ to respectively amplify and transmit the received signal.

When conventional relay transmission is applied, because the relay apparatus amplifies and transmits the received signal to the base station without converting the frequency, in a case that the relay apparatuses perform signal transmission, the respective relay apparatuses sequentially transmit the signal transmitted in the time slot n from the terminal in a time slot with the same frequency $f_0$. In this case, a required time until all the relay apparatuses complete signal transmission increases, as the number of relay apparatuses also increases. On the other hand, in relay transmission in the present embodiment, as shown in FIG. 8, because the respective relay apparatuses transmit the signal transmitted in the time slot n from the terminal T in the time slot n+1 by using a frequency different from each other, all the relay apparatuses can complete signal transmission in the time slot n+1. As a result, even when many relay apparatuses R transmit the received signal from the terminal T to the base station, signal transmission can be performed in a required time for one time slot. In this manner, in relay transmission in the present embodiment, there is an advantage in that the required time does not increase corresponding to the number of relay apparatuses.

In addition, the base station BS can receive the signal with stronger power than the case that one relay apparatus R relays and transmits the signal, by relaying and transmitting the signal from the terminal T by a plurality of the relay apparatuses R. In relay transmission in a mode shown in FIG. 8, the relay apparatuses R amplify and transmit the signal from the terminal T by using a different frequency from each other. In this case, the base station BS can individually receive the signals from the relay apparatuses R in the frequency domain, and synthesize these signals. In this case, propagation path fluctuation (a fading environment) from the relay apparatus R to the base station BS is different for each relay apparatus R. However, fading fluctuation between the respective relay apparatuses R and the base station BS becomes gradual as a whole by signal synthesis in the base station BS, and a diversity effect can be acquired in the frequency domain. This effect can be realized by transmitting the signal by the respective relay apparatuses R in different frequencies, and if the relay apparatuses R transmit signals with the same frequency, the respective signals interfere with each other, to enhance multipath fading.

In relay transmission in the present embodiment, when the relay apparatuses transmit signals in different frequencies, the relay apparatuses amplify and transmit the received signal in the same time slot to decrease a time delay when the relay apparatuses amplify and transmit the received signal from the terminal. In this manner, it is one of the characteristics of the present invention that the relay apparatuses transmit signals in the same time slot in different frequencies. In the present embodiment, a case that all the relay apparatuses transmit the signals in the "same time slot" is described. However, if a part of the transmitted signals is transmitted in the same time slot, the overall required time (the time delay) of the signals transmitted from the relay apparatuses is decreased. Therefore, even if signals transmitted from the relay apparatuses are not transmitted completely in the same time slot, effectiveness by relay transmission in the present embodiment can be ensured if a part of the transmitted signals is transmitted in the same time slot.

Relay transmission described in the present embodiment can be also applied to the case explained in the first embodiment with reference to FIGS. 5 and 6 (a case that the terminal T continuously transmits signals). That is, relay transmission can be applied to a case that a first relay apparatus group amplifies and transmits, in the time slot n+1, the signal received in the time slot n shown in FIG. 8, and a second relay apparatus group amplifies and transmits, in the time slot n+2, the signal received in the time slot n+1. Any one of the first relay apparatus group and the second relay apparatus group can have the system configuration including a plurality of relay apparatuses.

Third embodiment.

A third embodiment is explained next. In the second embodiment, relay transmission using a plurality of relay apparatuses has been explained. However, in the present embodiment, relay transmission using a relay apparatus having a plurality of antennas (a plurality of transmitting and receiving systems) is explained. The configuration of the relay apparatus according to the present embodiment is the same as that of the relay apparatus according to the first embodiment, except a feature of having a plurality of antennas. For example, the relay apparatus includes the transmitting and receiving systems shown in FIG. 4 in the same number as that of antennas.

FIG. 9 depicts an example of relay transmission in the third embodiment, and more specifically, FIG. 9 depicts a signal transmission operation of the terminal T and the relay apparatus $R_1$ having a plurality of antennas, and wireless resources to be used at the time of the signal transmission operation. In the second embodiment, the configuration in which relay transmission is performed by the respective relay apparatuses by using different frequencies is applied; however, as shown in FIG. 9, a configuration in which relay transmission (amplification and transmission) is performed by using a frequency different for each antenna can be applied to one relay apparatus $R_1$ having a plurality of antennas. In this case, the relay apparatus $R_1$ receives signals from the terminal T by each antenna, and amplifies and transmits the signals toward the base station BS with a frequency different from each other. The base station BS receives the signals with different frequencies and synthesizes these signals, thereby enabling to acquire the diversity effect and ensure favorable reception quality.

In this manner, in a relay apparatus having a plurality of antennas, a configuration in which the received signals are separated (converted) into different frequencies and transmitted is one mode of the present invention.

Regarding signal transmission using a plurality of antennas, a system associated with Multi-Input Multi-Output (MIMO) has been conventionally researched widely.

In MIMO transmission, when signals are transmitted by a plurality of antennas, the number of signals that can be separated by a receiver is limited by the number of receiving antennas of the receiver. Therefore, when the number of transmission antennas in the relay apparatus is larger than the number of receiving antennas in the base station, the base station cannot completely separate the signals transmitted from the antennas in the relay apparatus with the same frequency. On the other hand, as described in the present embodiment, if signals are transmitted with a frequency different for each antenna of the relay apparatus, the base station can independently receive the signals transmitted from the respective antennas of the relay apparatus. Therefore, the present embodiment demonstrates a significant effect when the relay apparatus has a large number of antennas, in an environment in which the relay apparatus and the base station have a plurality of antennas. That is, relay transmission in the present embodiment has a large effect when the number of antennas in the relay apparatus is larger than the number of antennas in the base station.

Fourth embodiment.

A fourth embodiment is explained next. In the present embodiment, a method of efficiently allocating a frequency to be used in the signal transmission by the terminal and the relay apparatus at the time of performing relay transmission in the first to third embodiments is explained.

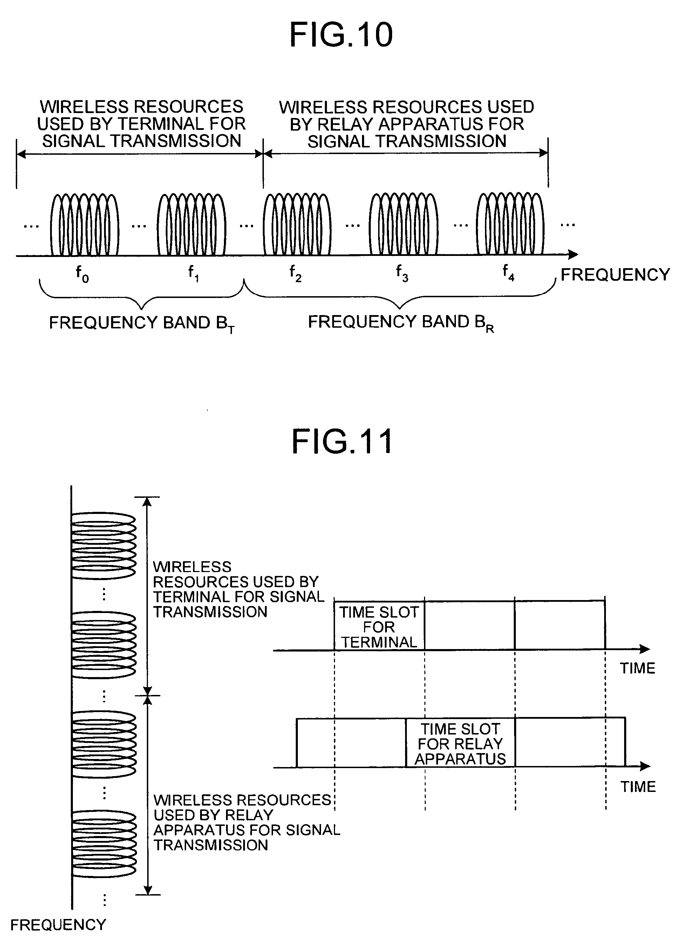

FIG. 10 is an example of a method of allocating a frequency to be used for signal transmission by the terminal and the relay apparatus in relay transmission in the fourth embodiment.

Relay transmission in the present embodiment is explained with reference to FIG. 10. In the wireless communication system according to the present embodiment, as shown in FIG. 10, only the terminal T acquires a specific dedicated frequency band for transmitting a signal. Further, only the relay apparatus R acquires another specific frequency band as a dedicated frequency band for transmitting a signal. In an example shown in FIG. 10, frequencies $f_0$ and $f_1$ are acquired as a dedicated frequency band $B_T$ for the terminal T, and frequencies $f_2$, $f_3$, and $f_4$ are acquired as a dedicated frequency band $B_R$ for the relay apparatus R. In this manner, according to such a configuration that the terminal T and the relay apparatus R respectively use a part of frequency bands as the dedicated frequency band, the base station BS can easily perform frequency resource management. Based on this configuration, at the time of transmitting a control signal for specifying a frequency band to be used to the terminal T (or the relay apparatus R), the base station BS reduces candidates of frequency to be allocated by excluding the dedicated frequency band of the relay apparatus R (or the terminal T) from an initial stage, thereby enabling to reduce the number of control bits to be informed to the terminal T (or the relay apparatus R).

The dedicated frequency band to be used by the relay apparatus R can have a frame configuration different from that of the frequency band to be used by the terminal T. For example, as shown in FIG. 11, a time slot width different between the band for the terminal T and the band for the relay apparatus R can be used. This is effective when the amount of control signal (for informing a connection state or the like) increases in the transmission from the relay apparatus R than in the transmission from the terminal T. On the contrary, when many control signals need to be attached to the transmission from the terminal T, a width of a transmission time slot from the terminal T can be made longer than that from the relay apparatus R. The different time slot width can be realized by changing the number of time symbols in one time slot. In this manner, in the configuration according to the present embodiment, that is, in the configuration in which the terminal T and the relay apparatus R use the dedicated frequency band, a frame configuration different between the terminal T and the relay apparatus R can be used, taking into consideration the amount of control signal required, respectively, by the terminal T and the relay apparatus R.

Besides, in the OFDMA system, a configuration in which a length of a guard interval transmitted by the terminal T and the relay apparatus R is changed can be used. Because the terminal T is located away from the base station BS, an error with respect to time synchronization used as a reference in a cell tends to increase. To compensate this state, the guard interval is set longer for signal transmission from the terminal T than that from the relay apparatus, and even when a time synchronization deviation from the reference of the cell occurs, occurrence of deviation of a symbol from the next symbol or from a transmitted signal of another terminal T can be suppressed. In this manner, a length of the guard interval in the transmitted signal from the terminal T and the relay apparatus R can be changed. Accordingly, according to the configuration in which the dedicated frequency band is respectively allocated to the terminal T and the relay apparatus R described in the present embodiment, flexible frame construction suitable for each of the terminal T and the relay apparatus R can be performed.

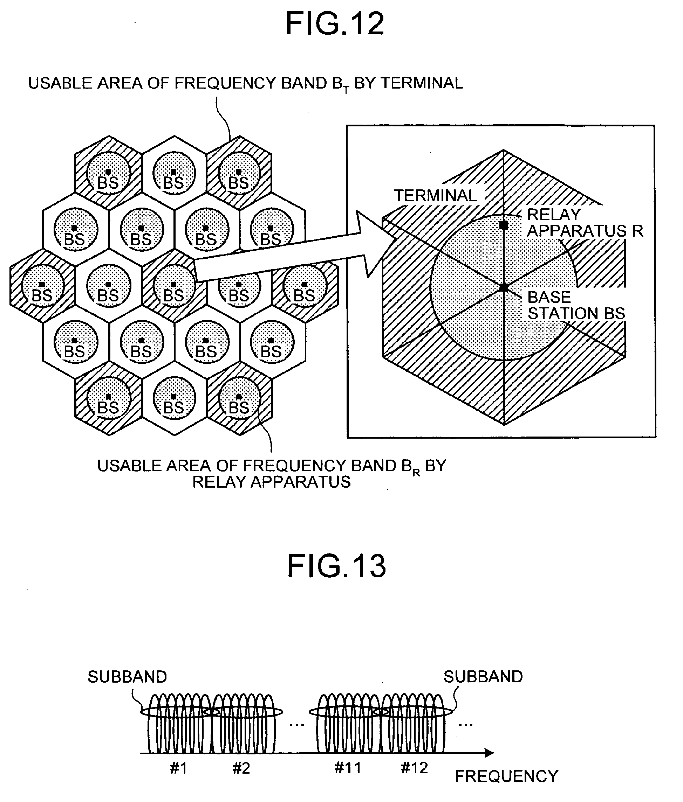

In addition, in the configuration based on the present embodiment, a frequency reuse factor different between the frequency band used by the terminal and the frequency band used by the relay apparatus can be set in a cellular environment. FIG. 12 is an example of a case that the frequency reuse factor different between the frequency band used by the terminal T and the frequency band used by the relay apparatus R is set in the cellular environment, and in FIG. 12, the frequency band used by the relay apparatus R is used repeatedly by respective cells. This state corresponds to a state where the reuse factor is 1 (U=1). On the other hand, the frequency band used by the terminal T is repeatedly used once by four cells, and this state corresponds to a state where the reuse factor is 4 (U=4). Generally, the relay apparatus R is frequently located closer to the base station BS than the terminal T, and near the base station BS, a signal can be transmitted to the base station BS with a small transmission power. As a result, the relay apparatus R can reduce an interference with an adjacent cell smaller than the terminal T, and a reuse factor smaller than that of the terminal T can be set.

That is, according to the present embodiment, a specific frequency to be used by the relay apparatus R can be used repeatedly by the number of cells smaller than that in the case of a specific frequency to be used by the terminal T. As a more preferable state, such a system that the frequency band to be used by the relay apparatus R is used in all cells, designating the reuse factor as U=1, can be applied.

The dedicated frequency band for the terminal T and the dedicated frequency band for the relay apparatus R described in the present embodiment can be adaptively changed according to a traffic environment. That is, when relay transmission is performed frequently, for example, when many terminals T are present at positions away from the base station BS, the base station BS transmits information of the frequency band to be used in relay transmission (a frequency band to be allocated for transmission from the relay apparatus) and a bandwidth thereof by a control signal to inform the terminal T and the relay apparatus R, and sets the bandwidth as a dedicated bandwidth for the relay apparatus. On the other hand, when the number of the terminals T that require relay transmission is small, the base station BS transmits a control signal for reducing or eliminating the bandwidth for performing relay transmission to the terminal T and the relay apparatus R, to release the setting of the dedicated band for the relay apparatus R. In this manner, by adaptively setting the dedicated frequency band for the terminal T and the relay apparatus R according to the traffic environment, the frequency can be efficiently used.

Fifth embodiment.

A fifth embodiment is explained next. In the present embodiment, in relay transmission in the first to fourth embodiments, a control signal for informing an allocation result of wireless resources to the terminal and the relay apparatus from the base station is explained.

As explained in the procedure 1-1) in the first embodiment, at the time of performing relay transmission, the terminal T, the respective relay apparatuses R, and the base station BS preliminarily arrange the wireless resources (frequency and time slot) to be used by using the control signal. At this time, it is important to inform the wireless resources to be used from the base station BS to the terminal T and relay apparatus R by using an efficient control signal (control information).

Therefore, when allocating the wireless resources, in a system that performs relay transmission, as shown in FIG. 13, subband numbers (#1, #2, ...) are given, designating certain units of subcarrier groups as a subband in a multicarrier transmission band. The base station BS allocates the wireless resources based on a system of the subband number. In transmission of the control signal for informing allocation of the wireless resources to the terminal T, relay transmission does not necessarily need to be used. By transmitting the control signal with a large transmission power or transmitting the control signal for plural times repeatedly, while relaying and transmitting a data signal, only the control signal can be directly exchanged between the terminal T and the base station BS.

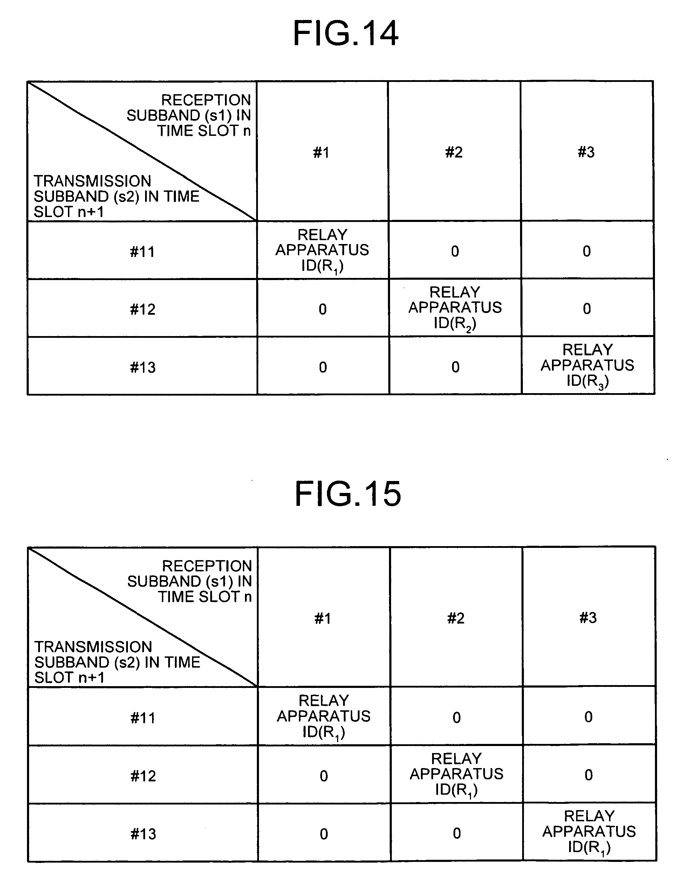

In the wireless communication system according to the present embodiment, for example, as shown in FIG. 14, the relay apparatus R creates a table for transmitting a signal, which is received in a subband s1 in the time slot n, in a subband s2 in the time slot n+1, and defines a relation between a time-frequency band received by the relay apparatus R and a time-frequency band transmitted by the relay apparatus R based on the table (both the base station BS and the relay apparatus R recognize the relation). The table in FIG. 14 represents a state that the relay apparatuses $R_1$, $R_2$, and $R_3$ respectively receive signals in subbands #1, #2, and #3 in the time slot n, and respectively transmit the received signals in subbands #11, #12, and #13 in the time slot n+1 (an allocation state of wireless resources). In the table in FIG. 14, because there is no relay apparatus R that transmits the signal, which is received in the subband #1 in the time slot n, in the subband #12 or #13 in the time slot n+1, "0" is written at positions corresponding to these subbands. Likewise, because there is no relay apparatus R that transmits the signal, which is received in the subband #2 in the time slot n, in the subband #11 or #13 in the time slot n+1, or there is no relay apparatus R that transmits the signal, which is received in the subband #3 in the time slot n, in the subband #11 or #12 in the time slot n+1, "0" is written at positions corresponding to these subbands.

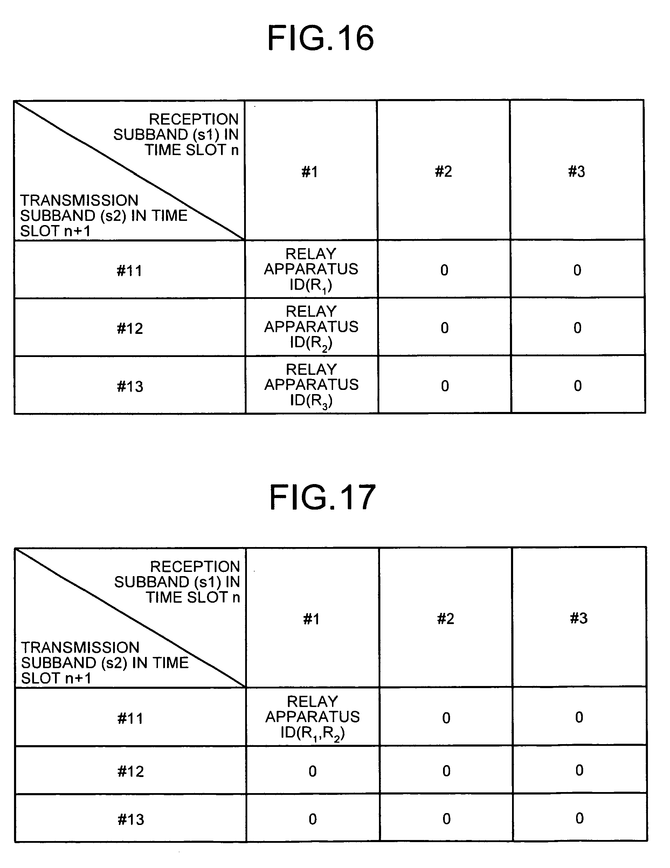

In the table in FIG. 14, a plurality of the relay apparatuses $R_1$, $R_2$, and $R_3$ respectively amplify and transmit different subband signals in different subbands. However, as shown in FIG. 15, one relay apparatus $R_1$ having a plurality of antennas can amplify and transmit signals received in the subbands #1, #2, and #3, respectively, in the subbands #11, #12, and #13. Further, as shown in FIG. 16, the relay apparatuses $R_1$, $R_2$, and $R_3$ respectively amplify and transmit signals, which are received in the subband #1, in the subbands #11, #12, and #13. Furthermore, a plurality of the relay apparatuses $R_1$ and $R_2$ can transmit signals, which are received in the same time frequency band, in the same time frequency band.

In this manner, various relay transmission environments (wireless resources used by the respective relay apparatuses R) can be informed from the base station BS to the respective relay apparatuses R by using the tables shown in FIGS. 14 to 17. At the time of actually informing the tables shown in FIGS. 14 to 17 from the base station BS to the respective relay apparatuses R, the tables are converted to bits and informed. At this time, it is essential to efficiently inform the tables with the number of bits as small as possible. Hereinafter, an operation for associating the reception frequency and the transmission frequency with each other is referred to as "subband mapping".

In the wireless communication system according to the present embodiment, a state generated with high frequency is displayed with a small bit to efficiently inform the subband mapping from the base station BS to the relay apparatus R. For example, as shown in FIG. 14, when a frequency of occurrence of a state that components other than diagonal components in the subband mapping become 0 is high, the state (a subband mapping result) is displayed and informed with 1 bit, so that the number of bits can be reduced. At this time, based on the state that the component other than diagonal components is "0", classification into a case that satisfies the state and a case that does not satisfy the state is performed. When the state is not satisfied, the informed bit can be shown to inform detailed subband mapping.

By grouping a plurality of the relay apparatuses R, subband mapping can be controlled per group. For example, the relay apparatuses $R_1$, $R_2$, and $R_3$ are designated as one group, and it is assumed that the relay apparatus $R_1$ receives a control signal for converting the subband #1 to the subband #11. At this time, the relay apparatus $R_2$ automatically

converts the subband #2 to the subband #12, and the relay apparatus $R_3$ automatically converts the subband #3 to the subband #13. This conversion is performed by the relay apparatuses $R_2$ and $R_3$ based on such a rule arranged beforehand that when an ID of the relay apparatus increases by 1, the reception subband number and the transmission subband number respectively increase by 1. In this manner, by grouping a plurality of the relay apparatuses R and informing each relay apparatus R of information of group numbers and information indicating regularity of the reception subband and the transmission subband by a control signal from the base station BS, each relay apparatus R can automatically determine mapping of the reception subband and the transmission subband based on the rule arranged beforehand. The rule arranged beforehand includes various modes, and any rule can be used. The rule arranged beforehand can be plural. In this manner, by grouping a plurality of relay apparatuses and instructing subband mapping, the amount of control signal can be reduced than in a case that individual control is performed. Further, as described in the present embodiment, the regularity such that as the number of the relay apparatuses increases by 1, the reception subband number and transmission subband number respectively increases by 1 is simple and it is one of particularly effective methods.

As a method different from the above method, it is effective to associate beforehand a subband transmitted by the terminal T and a subband amplified and transmitted by the relay apparatus R in one-to-one relation with each other for each cell. For example, in a certain cell, it is arranged that signals received in the subbands #1, #2, and #3 are certainly amplified and transmitted in the subbands #11, #12, and #13, and mapping information indicating this arrangement is informed to the respective relay apparatuses R in the cell beforehand. The relay apparatus R instructed by a control signal from the base station BS to relay (amplify and transmit) subband #N (N=1, 2, 3, ...) determines that the subband to be used is a subband #N based on the mapping information informed beforehand, and uses this subband to amplify and transmit the signal. In this manner, if a subband to be transmitted by the terminal T and a subband to be transmitted by the relay apparatus R are arranged beforehand according to a certain rule, independently of the relay apparatus R in charge, the base station BS need only to inform the relay apparatus R of a reception subband number for relay, and the amount of control signal at the time of performing relay transmission can be reduced.

Mapping of the subbands can be different per cell or per base station BS. For example, arrangement can be made such that in the own cell, signals received in the subbands #1, #2, and #3 are certainly amplified and transmitted in the subbands #11, #12, and #13, and in an adjacent cell, signals received in the subbands #4, #5, and #6 are certainly amplified and transmitted in the subbands #11, #12, and #13. In this case, in adjacent cells, the subbands #11, #12, and #13 to be transmitted by the relay apparatus R are the same, but the subband to be transmitted by the terminal T is changed. In this manner, if mapping of subbands different per cell or base station BS is set, there is an advantage in that the frequency reuse factor different between subbands used by the terminal T and the relay apparatus R can be set.

The case that the signal received in the time slot n is amplified and transmitted in the time slot n+1 is shown in FIGS. 14 to 17. Likewise, subband mapping when the signal received in the time slot n+1 is amplified and transmitted in the time slot n+2 can be separately created. Likewise, subband mapping when the signal received in the time slot n+2 is amplified and transmitted in the time slot n+3 can be separately created; however, this subband mapping can be the same as in the case that the signal received in the time slot n is amplified and transmitted in the time slot n+1. This is because the relay apparatus R finishes a series of relay processing in the time slot n and the time slot n+1, the same repetition can be performed in the time slot n+2 and the time slot n+3. Therefore, by informing from the base station BS to the relay apparatus R by a control signal that the same subband mapping is used in a certain time cycle t, the amount of control signal transmitted from the base station BS to the relay apparatus R can be reduced, as compared with the case that subband mapping is informed for each time slot. In this manner, by relaying and transmitting a signal by the relay apparatus R according to determined mapping in a certain time cycle, the amount of control signal informed from the base station BS to the relay apparatus R can be reduced. Further, in continuous time slots, by using different subband mapping and repeating the subband mapping with a plurality of time slot cycles, respective relay apparatuses R can amplify and transmit received signals smoothly, while avoiding such a phenomenon that reception and transmission occur at the same time in one relay apparatus R.

In the present embodiment, the configuration can be such that the relay apparatus R confirms a transmission terminal ID to relay and transmit a signal. However, the received signal can be simply frequency-converted and transmitted by the relay apparatus R in the next time slot, without knowing which terminal T has transmitted the signal. In this case, there is a significant advantage in that the relay apparatus R does not need to recognize the terminal ID, and control of relay transmission can be performed with a simple configuration. Further, even if the transmission terminal T is changed according to the time slot, the relay apparatus can perform amplification and transmission according to the determined subband mapping rule, without noticing the change of the transmission terminal T. In this manner, even if the transmission terminal T is changed, the relay apparatus R does not need any particular control. Therefore, the amount of control signal can be reduced, as compared with conventional relay transmission in which the transmission terminal T is confirmed to perform relay transmission.

In FIGS. 14 to 17, subband mapping in one cell is shown. However, in another cell, the subband number used by the terminal T can be different. This is because the subband is repeatedly used per a plurality of cells, and the same subband may not be used in the adjacent cell. In this case, respective base stations inform the relay apparatus of the subband number to be used in the cell beforehand. Accordingly, subband mapping can be performed based on the subband number different for each cell.

As described above, by using the control signal having the configuration described in the present embodiment, the base station can efficiently inform the relay apparatus R of the reception subband and the transmission subband and the time slot thereof to be used.

Sixth embodiment.

A sixth embodiment is explained next. In the mobile communication system in recent years, application of the OFDMA system including the scheduling function has been widely studied. Meanwhile, in the future mobile communication system (wireless communication system), a configuration that can apply relay transmission without requiring a large change in an interface of the conventional specification is desired. In the present embodiment, therefore, relay transmission that can be introduced without requiring a large change in the interface of the existing standard for performing scheduling in the multicarrier transmission system is explained.

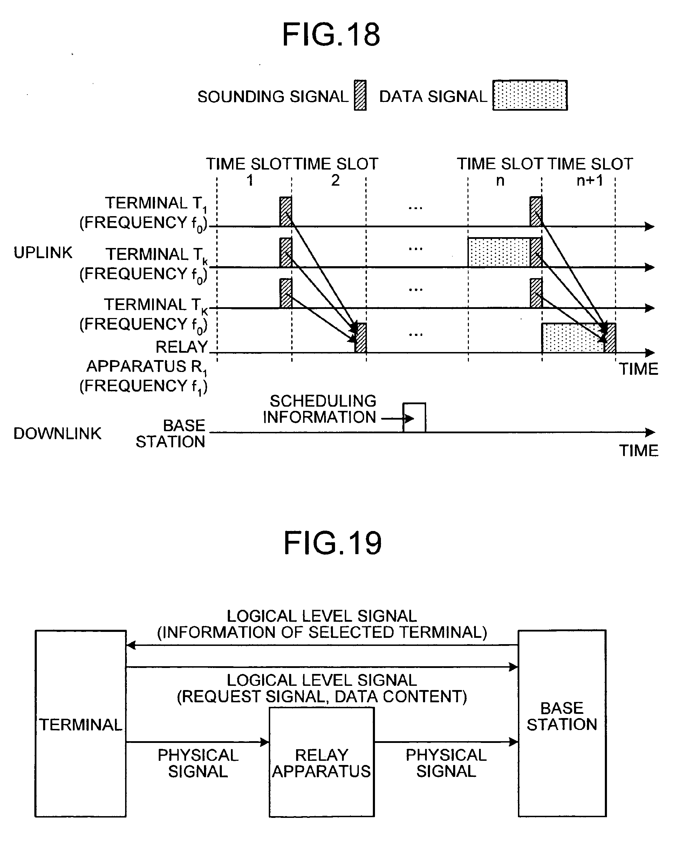

Scheduling control in relay transmission in the present embodiment is explained below. FIG. 18 is an example of a signal transmission operation by the terminal T and the relay apparatus R in the wireless communication system according to the sixth embodiment, and depicts a temporal relation between respective transmission signals. Relay transmission in the present embodiment is explained with reference to FIG. 18.

In relay transmission in the wireless communication system according to the present embodiment, scheduling by the base station and amplification and transmission by the relay apparatus are performed according to the following procedures.

6-1) Respective terminals $T_k$ (k=1, ..., K) transmit sounding signals orthogonal to each other with the frequency $f_0$ in a time slot 1 shown in FIG. 18. The sounding signal is a known signal for propagation measurement. The relay apparatus $R_1$ amplifies and transmits the received signal with the frequency $f_0$ in the time slot 1 (the received sounding signal from the terminal $T_k$) with the frequency $f_1$ in a time slot 2, according to an instruction from the base station BS.

6-2) The base station BS uses the sounding signal included in the received signal with the frequency $f_0$ in the time slot 1 and the received signal with the frequency $f_1$ in the time slot 2 to measure a reception state when respective terminals $T_k$ transmit the signal.

6-3) The base station BS uses a predetermined scheduling algorithm to select a terminal $T_k$ (transmission terminal) suitable for data transmission among the terminals $T_k$ that have transmitted the sounding signal, based on a reception state as a result of measurement. Further, the base station BS selects a Modulation and Coding Scheme (MCS) to be used at the time of transmitting data by the selected transmission terminal. The base station BS transmits a scheduling result (scheduling information including the selected transmission terminal and information of the MCS) to the respective terminals $T_k$ and the relay apparatus $R_1$ by a downlink. The scheduling algorithm to be used is not particularly specified (any existing algorithm can be used).

6-4) The terminal $T_k$ indicated by the scheduling result (the selected terminal $T_k$) transmits a data signal with the frequency $f_0$ in the time slot n. The relay apparatus $R_1$ amplifies and transmits the received signal from the terminal $T_k$ with the frequency $f_1$ in the time slot n+1 according to the scheduling result. Further, the base station BS demodulates the signal by synthesizing the received signals in the times slots n and n+1.

The control procedure of relay transmission when the scheduling control in the present embodiment is applied is as explained above.

As in the control of relay transmission explained with reference to FIGS. 5 and 6 in the first embodiment, such a configuration is also possible that respective terminals (terminals $T_1$, ..., $T_k$) transmit the sounding signal in continuous time slots, that is, after the respective terminals transmit the sounding signal in the time slot 1, the respective terminals transmit the sounding signal also with the frequency $f_0$ in the time slot 2, and a relay apparatus different from the relay apparatus $R_1$ that performs relay transmission (amplifies and transmits the signal) in the time slot 2 performs relay transmission of the signal transmitted in the time slot 2 from each terminal in the time slot 3.

Further, the relay apparatus R can perform frequency conversion according to an instruction of the base station BS, by executing the similar control to that described in the fifth embodiment. A plurality of terminals $T_k$ transmit sounding signals orthogonal to each other, and an orthogonal relation of the plurality of sounding signals is maintained at the time of relay transmission by the relay apparatus R. If the sounding signal with the orthogonal relation being maintained is used, the base station BS can measure a transmission state at the time of signal transmission by the terminal $T_k$ individually and independently for each of the terminals $T_k$. Further, as a more preferable configuration, it is desired that the relay apparatus R sets the same gain at the time of amplifying and transmitting the data signal as the gain at the time of amplifying and transmitting the sounding signal. By using the same gain, the same transmission state as that of the sounding signal is ensured at the time of transmitting the data signal, thereby enabling to perform signal transmission smoothly.

By performing the scheduling explained in the above procedures 6-1) to 6-4), the terminal $T_k$ having a good transmission state can be selected. In the present embodiment, a case that a data signal is transmitted in one subband is explained. However, in the multicarrier transmission and in the communication of the OFDMA system, the same control as in the present embodiment is performed in parallel in other subbands.

From another viewpoint, the present embodiment can be recognized as a system in which the control for selecting the terminal T is performed only by end-to-end fashion in the wireless communication system in which a signal from the terminal T is relayed and transmitted by the relay apparatus R and received by the base station BS. That is, in the present embodiment, the relay apparatus R amplifies and transmits the signal after performing predetermined frequency conversion; however, the relay apparatus R can operate without knowing a source terminal T of the signal. Therefore, in relay transmission in which scheduling control is performed, only the base station BS holds a terminal selection function, and measures end-to end communication quality (from the terminal T to the base station BS) to select the transmission terminal. Thereafter, the base station BS informs the terminals of the selection result (information of the selected terminal). FIG. 19 is a conceptual diagram of scheduling in the present embodiment, in which a signal in a physical level (as seen in an actual transmission symbol level) is transmitted via the relay apparatus; however, the relay apparatus does not intervene in the signal in a logical level (as seen in a content level of the signal). In this manner, in the present embodiment, it is one of the characteristics of the present invention that the relay apparatus relays a physical signal, but is not involved in a terminal selection process in the scheduling control (the relay apparatus does not need to analyze the content of the signal to be relayed).

Seventh embodiment.

A seventh embodiment is explained next. In the present embodiment, a specific example of the scheduling algorithm applied to a scheduling operation in relay transmission described in the sixth embodiment is described.

As an example of the algorithm used at the time of selecting a transmission terminal ($T_k$) by the base station BS from terminals $T_1$, $T_2$, $T_3$, ..., $T_K$ in the procedure 6-3) described in the sixth embodiment, an algorithm in the following equation can be mentioned.

$$k = \arg_{k0} \max \gamma_{k0}$$

$\gamma_{k0}$ expresses a received-signal power to noise-plus-interference power ratio (a reception SINR) of the sounding signal transmitted from a terminal $T_{k0}$ in the base station BS. When this algorithm is used, the base station BS selects a terminal $T_k$ having the largest reception SINR of the sounding signal as the transmission terminal. After selecting the terminal $T_k$ according to the algorithm, as explained in the sixth embodiment, the base station BS selects the MCS to be allocated to the terminal $T_k$. At this time, the base station BS selects the MCS based on SINR$\gamma_k$ of the sounding signal transmitted from the selected transmission terminal $T_k$. The transmission terminal $T_k$ transmits a data packet according to the MCS specified by the base station BS.

In this manner, by giving a transmission permission to a terminal having the highest reception SINR (reception SINR of the sounding signal) measured in the base station BS, an effect of improving transmission efficiency by scheduling can be acquired also at the time of relay transmission.

Eighth embodiment.

An eighth embodiment is explained next. In relay transmission, a plurality of time slots or wireless resource units are generally required for transmission of one data signal. Therefore, relay transmission is effective for increasing coverage; however, it is hard to say that the wireless resources are being effectively used, and in many cases, the frequency use efficiency decreases as an entire system. In the present embodiment, therefore, relay transmission for dissolving such a problem is explained.

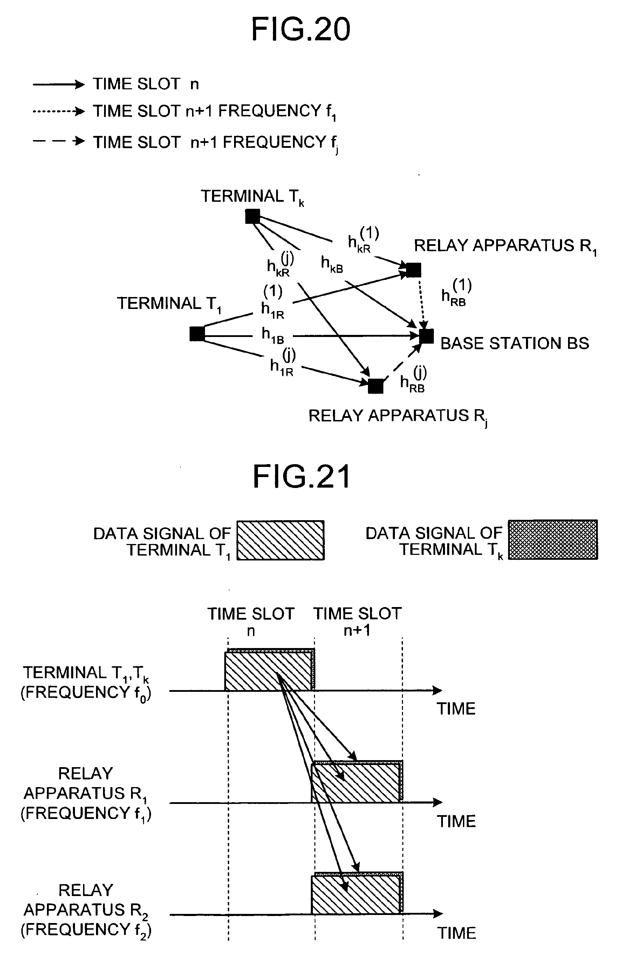

FIG. 20 depicts a configuration of the wireless communication system and an example of a relay transmission operation in the eighth embodiment, and depicts relay transmission in the wireless communication system in which there are a plurality of terminals (terminal $T_1$, ..., TK) and a plurality of relay apparatuses (the relay apparatus $R_1$, ..., $R_J$) in the cell of the base station BS. Further, FIG. 21 is an example of a relation between a timing of signal transmission performed by the respective terminals and the respective relay apparatuses in the wireless communication system according to the present embodiment and wireless resources to be used. Relay transmission in the present embodiment is explained below with reference to FIGS. 20 and 21.

As shown in FIGS. 20 and 21, in relay transmission in the present embodiment, a plurality of terminals $T_k$ (k=1, 2, ..., K) simultaneously transmit signals with the frequency $f_0$ in the first time slot (corresponding to "time slot n" shown in FIGS. 20 and 21), and a plurality of relay apparatuses $R_j$ (j=1, 2, ..., J) amplify the received signals to $G^{(j)}$ times the power, respectively, and transmit the signals to the base station BS with a frequency $f_j$ in the second time slot (the time slot n+1). The base station BS synthesizes the signals received in the first and second time slots, thereby separately detecting transmitted signals from the respective terminals ($T_1$, ... , $T_K$).

That is, in relay transmission in the present embodiment, the terminals $T_k$ transmit signals simultaneously, and the relay apparatuses $R_j$ amplify and transmit the signals. This system is hereinafter referred to as "multi-user relay transmission". In conventional relay transmission, one signal is transmitted in one time slot. However, in multi-user relay transmission described in the present embodiment, a plurality of terminals $T_k$ multiplex a plurality of signals by using the same wireless resources (one time slot and frequency), thereby enabling to improve system capacity. A process in which the terminals $T_k$ transmit signals simultaneously and the base station BS separates the multiplexed signals is explained below in detail.

To explain this point, a signal transmission model as a background is explained first. In the following explanations, aT and $a^H$ denote transposition and complex conjugate transpose of a vector a, respectively. Further, complex propagation gains from the terminal $T_k$ to the base station BS, from the terminal $T_k$ to the relay apparatus $R_j$, and from the relay apparatus $R_j$ to the base station BS are, respectively, denoted by $h_{kB}$, $h_{kR}$, and $h_{RB}$.

For example, when the terminal $T_k$ transmits the qth symbol $s_k(q)$ ($E[|s_k(q)|^2]=1$) with power $P_k$, and the relay apparatus $RS_j$ amplifies and transmits the received signal with power gain $G^{(j)}$, received signals $y_0(q)$ and $y_1^{(j)}(q)$ of the qth symbol with the frequency $f_0$ in the time slot n and with the frequency $f_j$ in the time slot n+1 in the base station BS are respectively provided by the following equations.

[Equation 4]

$$Y_0(q) = h_{kB} \sum_{k=1}^{K} \sqrt{P_k}\, s_k(q) + z_{B0}(q) \tag{1}$$

$$y_1^{(j)}(q) = h_{RB}^{(j)} \sqrt{G^{(j)}} \left( \sum_{k=1}^{K} h_{kR}^{(j)} \sqrt{P_k}\, s_k(q) + z_R^{(j)}(q) \right) + z_{B1}^{(j)}(q) \tag{2}$$

$Z_{B0}(q)$ and $Z_{B1}^{(j)}(q)$ are, respectively, interference noise components with the frequency $f_0$ in the time slot n and the frequency $f_j$ in the time slot n+1 in the base station BS, and average interference noise powers thereof are expressed as $Z_{B0}$ ($=E[|Z_{B0}(q)|^2]$) and $Z_{B1}^{(j)}$ ($=E[|Z B1^{(j)}(q)|^2]$). Further, $Z_R^{(j)}(q)$ denotes an interference noise component in the relay apparatus $R_j$, and the average interference noise power thereof is expressed as $Z_R^{(j)}$ ($=E[|Z_R^{(j)}(q)|^2]$).

When the above equations (1) and (2) are expressed by a determinant, a received signal vector $y(q)=[y_0(q), y_1^{(1)}(q), ..., y_1^{(J)}(q)]^T$ is expressed by the following equation.

[Equation 5]

$$y(q) = \sum_{k=1}^{K} \sqrt{P_k}\, h_k s_k(q) + z(q)$$

$$h_k = [h_{kB}, \sqrt{G^{(1)}} h_{kR}^{(1)} h_{RB}^{(1)}, \ldots, \sqrt{G^{(J)}} h_{kR}^{(J)} h_{RB}^{(J)}]^T$$

$$z(q) = [z_{B0}(q), \sqrt{G^{(1)}} h_{RB}^{(1)} z_R(q) + z_{B1}^{(1)}, \ldots, \sqrt{G^{(J)}} h_{RB}^{(J)} z_R(q) + z_{B1}^{(J)}]^T$$

In this manner, respective signals are described as signals in (J+1)-dimensional space. Therefore, when the base station BS uses optimum weight $W_k=(\phi^{-1}h_k)^*$ to extract a signal k, a reception SNR $\Gamma_k$ of the signal k at a synthesized output $W_k^T y(q)$ thereof is given by the following equation.

[Equation 6]

$$\Gamma_k = \frac{P_k \left| w_k^T h_k \right|^2}{w_k^T \Phi w_k^*} = P_k h_k^H \Phi^{-1} h_k$$

$\phi$ is as in the following equation.

[Equation 7]

$$\Phi = R_z + \sum_{k0=1, k0 \neq k}^{K} h_{k0} h_{k0}^H$$

Further,

$$R_z \equiv E[z(q)z(q)^H]$$

$$= diag[Z_{B0}, G^{(1)}|h_{RB}^{(1)}|^2 Z_R^{(1)} + Z_{B1}^{(1)}, \ldots,$$

$$G^{(J)}|h_{RB}^{(J)}|^2 Z_R^{(J)} + Z_{B1}^{(J)}].$$

In the case of K=1, the following equation (3) is established.

$$\Gamma_k = P_k h_k^H R_z^{-1} h_k \tag{3}$$

Likewise, in the case of $h_{k1}^H h_{k2} = 0$ $(k_1 \neq k_2)$, the following equation (4) is established.
$$\Gamma_k = P_k h_k^H R_z^{-1} h_k \qquad k=1, \ldots, K \tag{4}$$

Therefore, if $h_{k1}^H h_{k2} = 0$ $(k_1 \neq k_2)$, signals from a plurality of (K) terminals can be multiplexed in one time slot, as in the case of signal transmission from one terminal (K=1). If a combination of terminals $T_k$ ($T_{k1}$, $T_{k2}$) that satisfies $h_{k1}^H h_{k2} = 0$ or that is close to this state is selected under a condition that total transmission power of K terminals is constant ($P_1 + P_2 + P \ldots + P_k$ = constant), the respective terminals $T_k$ can acquire transmission performance close to a case that relay transmission is performed by a single terminal, thereby enabling to increase communication capacity. Generally, with Shannon's channel capacity, contribution to the capacity is large in the case of increasing the number of multiplexed signals rather than the case of increasing the power. Therefore, in the present embodiment, a plurality of terminals transmit data signals simultaneously to increase the number of data streams. As a result, the communication capacity is greatly increased than in conventional relay transmission in which one data stream is relayed and transmitted.
To explain this relation more clearly, following two cases are compared with each other.

(Case A: conventional relay transmission)

One of terminals $T_k$ (k=1, ..., K) transmits a signal with transmission power $P_k$, and the relay apparatus R amplifies and transmits a received signal to the base station BS.

(Case B: relay transmission in the present embodiment)

Terminals $T_k$ (k=1, ..., K) transmit signals simultaneously with transmission power $P_k$, and the relay apparatus R amplifies and transmits received signals to the base station BS.

In case A and case B, the total transmission power of the terminals is the same. However, the channel capacity is different. That is, an average channel capacity $C_A$ in case A is expressed by the following equation (5) by using the above equation (3).

[Equation 8]

$$C_A = \frac{1}{K} \sum_{k=1}^{K} W \log_2 (1 + P_k h_k^H R_z^{-1} h_k) \qquad (5)$$

W denotes a transmission band. Meanwhile, the channel capacity $C_B$ in case B is expressed by the following equation (6) by using the above equation (4), in the case of the relation of $h_{k1}^H h_{k2}=0$ ($k_1 \neq k_2$) being maintained.

[Equation 9]

$$C_B = \sum_{k=1}^{K} W \log_2 \left( 1 + \frac{P_k}{K} \cdot h_k^H R_z^{-1} h_k \right) \qquad (6)$$

The following equation is established, and thus $C_A \leq C_B$ is established.

[Equation 10]

$$\log_2 \left( 1 + \frac{P_k}{K} \cdot h_k^H R_z^{-1} h_k \right) = \frac{1}{K} \log_2 \left( 1 + \frac{P_k}{K} \cdot h_k^H R_z^{-1} h_k \right)^K$$

$$= \frac{1}{K} \log_2 \left( 1 + P_k \cdot h_k^H R_z^{-1} h_k + \cdots \right)$$

$$\geqq \frac{1}{K} \log_2 \left( 1 + P_k \cdot h_k^H R_z^{-1} h_k \right)$$

In this manner, the effectiveness of the multi-user relay transmission system (case B) described in the present embodiment can be confirmed also based on a theoretical equation of the channel capacity.

The case of "$h_{k1}^H h_{k2}=0$" is mainly assumed and discussed here; however, even if this condition is not completely satisfied, in many cases, the channel capacity can be increased by increasing the number of multiplexed signal. This is based on a basic principle of communication such that even if reception power of one signal is increased, the number of bits that can be transmitted does not largely increase, whereas when a plurality of signals are multiplexed, many bits can be transmitted.

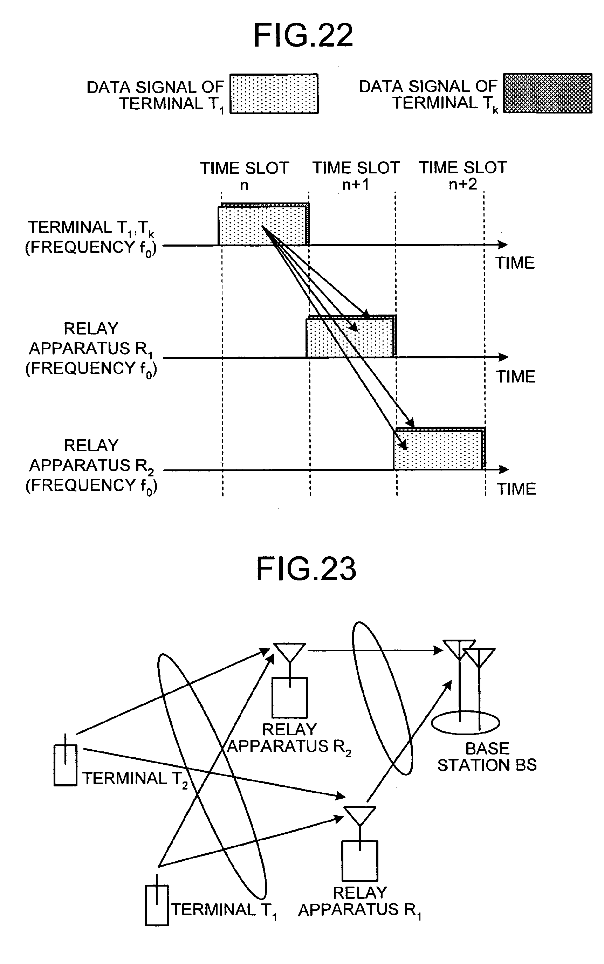

Further, the first to seventh embodiments are characterized such that the transmission efficiency is improved by converting frequencies of a received signal and a transmitted signal by the relay apparatus. However, relay transmission in the eighth embodiment also includes a case that the relay apparatus transmits a received signal and a transmitted signal with the same frequency. That is, it is a characteristic of relay transmission in the present embodiment that a plurality of terminals transmit signals in the same time slot and frequency, and the base station separates and receives multiple signals, which are amplified and transmitted by the relay apparatus to the base station. Therefore, relay transmission in the present embodiment also includes a case that signals transmitted from a plurality of terminals in the same time slot and frequency are amplified and transmitted by the relay apparatus in a different time slot from and with the same frequency as that of the terminal, as shown in FIG. 22. Also in this case, the base station BS can separately receive the multiple signals from the terminals by using signals received in a plurality of time slots. As a result, the channel capacity at the time of relay transmission can be increased, thereby enabling to improve the frequency use efficiency.

Ninth embodiment.

A ninth embodiment is explained next. In the present embodiment, multi-user relay transmission in a configuration different from that of the eighth embodiment is described.

FIG. 23 is an example of a relay transmission operation (multi-user relay transmission) in the ninth embodiment. As shown in FIG. 23, in the multi-user relay transmission in the present embodiment, a plurality of terminals transmit signals simultaneously in the time slot n in a certain frequency, and a plurality of relay apparatuses transmit signals received from the respective terminals simultaneously in the time slot n+1. The base station according to the present embodiment has a plurality of antennas, and receives the signal (signal in which the signals from the respective relay apparatuses are multiplexed) by using these antennas. By separating the multiple signals by using the signals received by the antennas, the base station can receive a plurality of signals simultaneously. In a separation process of the multiple signals, an existing method is used. For example, a Minimum Means Square Error (MMSE) synthesis method and a Zero-Forcing (ZF) method are well known.

Generally, a receiver (the base station in this example) can separately receive multiple signals of the same number as that of antennas by using the signals received by the antennas. Therefore, as shown in FIG. 23, when the number of terminals that transmit signals is equal to or less than the number of antennas in the base station, because the respective relay apparatuses amplify and transmit received signals in the next time slot of the time slot in which the signals are received from the respective terminals, the base station can separately receive the multiple signals. Respective relay apparatuses do not necessarily need to amplify and transmit the signals in the next time slot of the time slot in which the signals are received from the terminals. For example, the respective relay apparatuses can amplify and transmit signals in a time slot two slots after reception of the signals from the terminals.

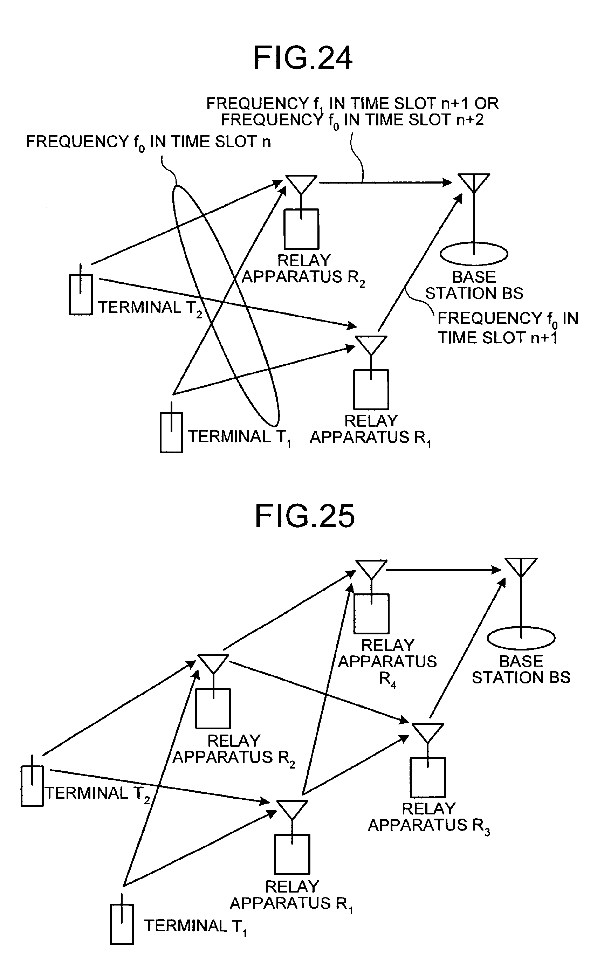

Further, multi-user relay transmission having the configuration shown in FIG. 24 can be used. FIG. 24 depicts a case that a part of the relay apparatuses amplify and transmit signals with wireless resources (time slot and frequency) different from those of other relay apparatuses. When the number of antennas in the base station is less than that of the terminals that transmit signals, the base station can acquire a multidimensional signal from received signals by using relay transmission as shown in FIG. 24. The base station BS then can use the MMS synthesis method or ZF reception method, to separate and extract multiple signals from the multidimensional signal acquired with a plurality of wireless resources.

In this manner, the relay apparatuses transmit signals by using a time slot and frequency different from each other, and the base station can separately receive multiple signals with the number of multiplexing larger than the number of antennas.

As shown in FIGS. 23 and 24, allocation of the wireless resources suitable for signal transmission changes according to the number of multiple signals (the number of multiplexed signals), the number of relay apparatuses, and the number of antennas in the base station. Therefore, at the time of performing relay transmission in the present embodiment, the base station adaptively controls the wireless resources to be allocated to the relay apparatuses according to the number of multiplexed signals, the number of relay apparatuses, and the number of antennas in the base station. Accordingly, flexible response becomes possible with respect to various numbers of multiplexed signals.

A case that one relay apparatus is present between the terminal and the base station is explained above. However, as shown in FIG. 25, two or more relay apparatuses can perform relay transmission (a plurality of relay apparatuses can perform amplification and transmission of signals more than once between the terminal and the base station to relay signals). Also in this case, the relay apparatus can perform amplification and transmission of signals according to control information of the time slot and subband (frequency) for reception and of the time slot and subband for transmission. The base station can separate and extract multiple signals from the received signals in the same manner as described above.

As another advantage of the multi-user relay transmission, there can be mentioned that it is quite hard to decode one signal by respective relay apparatuses. This is because signals are multiplexed and transmitted, whereas respective relay apparatuses do not have a multidimensional received signal required for separating the multiple signals, and cannot separately receive an individual signal. As a result, it is hard to decode a specific signal by the relay apparatus, and relay transmission can be performed, while maintaining high confidentiality. Particularly, when the relay apparatus belongs to another person or another terminal, it is important for the user that the relay apparatus cannot decode data. The present invention provides a remarkably effective relay transmission method that can satisfy requirements from users.

Tenth embodiment.

A tenth embodiment is explained next. In the present embodiment, a scheduling method that can be used in the multi-user relay transmission described above is explained.

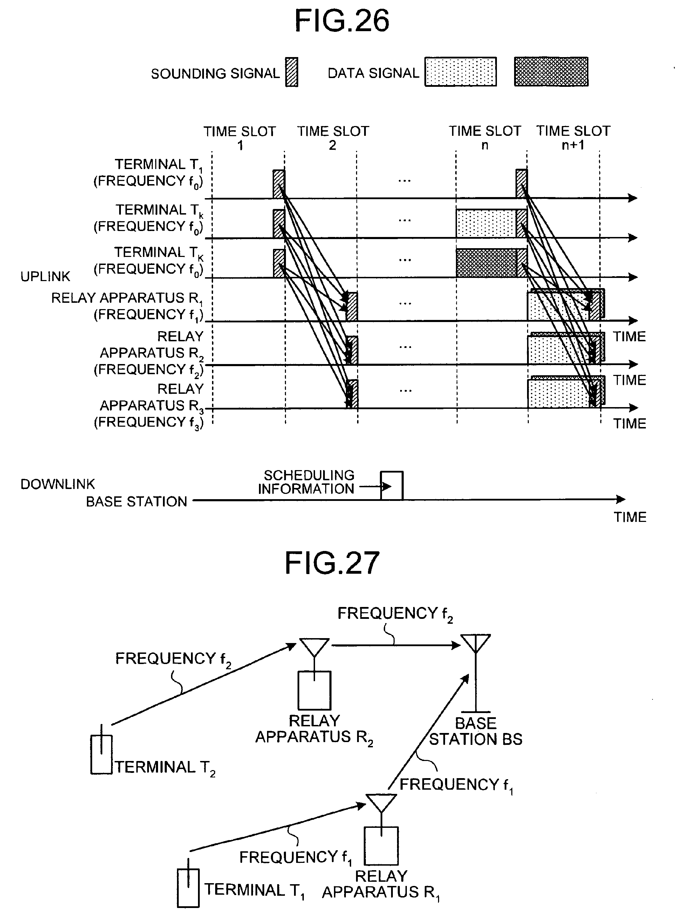

FIG. 26 is an example of a relation between a timing of signal transmission performed by the terminal $T_k$ and the relay apparatus $R_j$ in the wireless communication system according to the tenth embodiment and wireless resources to be used. Control of relay transmission in the present embodiment is explained below with reference to FIG. 26.

10-1) Respective terminals $T_k$ (k=1, ..., K) transmit sounding signals orthogonal to each other with the frequency $f_0$ in the time slot 1 shown in FIG. 26. The sounding signal is a known signal for propagation measurement. The respective relay apparatuses $R_j$ amplify and transmit the received signals with the frequency $f_0$ in the time slot 1 (the sounding signals received from the terminals $T_k$) with the frequency $f_j$ (j=1 ..., J) in the time slot 2, according to an instruction from the base station BS.

10-2) The base station BS uses the sounding signals included in the received signals with the frequency $f_0$ in the time slot 1 and the received signals with the frequency $f_j$ in the time slot 2 to measure a reception state when respective terminals $T_k$ transmit the signal.

10-3) The base station BS uses a predetermined scheduling algorithm to select a combination of terminals $T_k$ (transmission terminals) suitable for data transmission among the terminals $T_k$ that have transmitted the sounding signal, based on the reception state as a result of measurement. Further, the base station BS selects the MCS to be used at the time of transmitting data by the selected transmission terminals. The base station BS transmits a scheduling result (scheduling information including the selected transmission terminals and information of the MCS) to the respective terminals $T_k$ and the respective relay apparatuses $R_j$ by a downlink. The scheduling algorithm to be used is not particularly specified.

10-4) The terminals $T_k$ indicated by the scheduling result (the selected terminals $T_k$) transmit a data signal with the frequency $f_0$ in the time slot n. The relay apparatuses $R_j$ amplify and transmit received signals from the terminals $T_k$ with the frequency $f_j$ in the time slot n+1 according to the scheduling result. Further, the base station BS demodulates the signals by synthesizing the received signal with the frequency $f_0$ in the time slot n and the received signal with the frequency $f_j$ in the time slot n+1.

The control procedure of the multi-user relay transmission when the scheduling control in the present embodiment is applied is as explained above.

The terminals $T_k$ transmit the sounding signals orthogonal to each other, and an orthogonal relation between a plurality of sounding signals is maintained at the time of relay transmission by the relay apparatuses R. Therefore, the base station BS can individually measure the transmission state when the terminals $T_k$ transmit signals, for each terminal $T_k$. Further, as a more preferable configuration, it is desired that the relay apparatus $R_j$ sets the same gain at the time of amplifying and transmitting the sounding signal and at the time of amplifying and transmitting a data signal. By setting the same gain, the transmission state same as that of at the time of amplifying and transmitting the sounding signal can be ensured at the time of amplifying and transmitting the data signal, thereby enabling smooth signal transmission.

The terminal $T_k$ having a good transmission state can be selected by executing the scheduling control described in the present embodiment to select a combination of terminals suitable for transmission. Further, there are various scheduling algorithms for selecting a combination of terminals in the above procedure 10-3), and as one of these, there is a method of selecting a combination of terminals $T_{k1}$ and $T_{k2}$ having a state close to $h_{k1}^H h_{k2}=0$ from many terminals. In this case, high communication capacity can be achieved (the transmission efficiency can be improved) as explained in the seventh embodiment.

Eleventh embodiment.

An eleventh embodiment is explained next. In the present embodiment, a specific example of a control operation for selecting a transmission terminal in scheduling of the multi-user relay transmission described above is explained.

When a combination of transmission terminals is selected in the procedure 10-3) described in the tenth embodiment, the base station BS gives a transmission permission to a terminal having a high reception SINR of the relayed and transmitted sounding signal. In this case, an effect of improving the transmission efficiency by the scheduling can be acquired even at the time of relay transmission. In the present embodiment, therefore, as one of the scheduling algorithms in the multi-user relay transmission, an algorithm including the following procedures 11-1) to 11-4) is disclosed.

11-1) Set m=1 and system throughput F(0)=0 (perform initialization).

11-2) Select a transmission terminal from all unselected terminals $T_k$ (k=1, ..., K) based on the following equation. Specifically, a terminal $T_k$ having the largest reception SINR $r_{k|m}$ is selected as a transmission terminal $T_{k(m)}$, where $a^H$ denotes a conjugate transpose of the vector a.

[Equation 11]

$$\Gamma_{k|m} = \frac{P_0}{m} h_k^H \Phi_m^{-1} h_k$$

$$\Phi_m = R_z + \frac{P_0}{m} \sum_{i=1}^{m} h_{k(i)} h_{k(i)}^H \qquad (7)$$

11-3) Calculate system throughput F(m) with the number of multiplexed signals m, and in the case of F(m)>F(m-1), proceed to the procedure 11-4). In other cases, the process finishes with $m_{max}$=m-1.
11-4) In the case of m<M, the procedure returns to 11-2). In other cases, the process finishes with $m_{max}$=M. M denotes the largest possible number of multiplexed signals.

According to the above processes, the transmission terminal $T_{k(m)}$ (m=1, ..., $m_{max}$) is sequentially determined.
Further, the final reception SINR $r_{k|m\text{-}max}$ of the signal is calculated based on the above equation (7), to determine the MCS to be used when the respective transmission terminals transmit data, based on the reception SINR of the sounding signals from the respective transmission terminals. At the time of determining the MCS, a correspondence table between the reception SINR and the MCS is created beforehand, and the MCS is selected based on the correspondence table.
In the above procedure 11-3), the system throughput F(m) is provided by the following equation.
[Equation 12]

$$F(m) = \sum_{i=1}^{m} f(\Gamma_{i|m_{max}})$$

f(Γ) is a throughput realized by one data packet, and uniquely provided as a function of reception SINR Γ. Specifically, the MCS of the packet is determined based on the reception SINR $\Gamma_{k|m}$ calculated based on the above equation (7), and the throughput is determined based on the determined MCS.
According to the algorithm described in the present embodiment, a combination of terminals having a good propagation state capable of realizing high throughput can be selected. Further, the reception SINR can be calculated, taking into consideration an influence of other data packets to be multiplexed. As a result, the reception quality can be predicted highly accurately by using the sounding signal, and high efficiency of system transmission can be realized.

Twelfth embodiment.

A twelfth embodiment is explained next. In the present embodiment, effectiveness of relay transmission described in the eighth embodiment or the like, specifically, effectiveness of multi-user relay transmission in which signals transmitted simultaneously from a plurality of terminals are relayed and transmitted is explained.

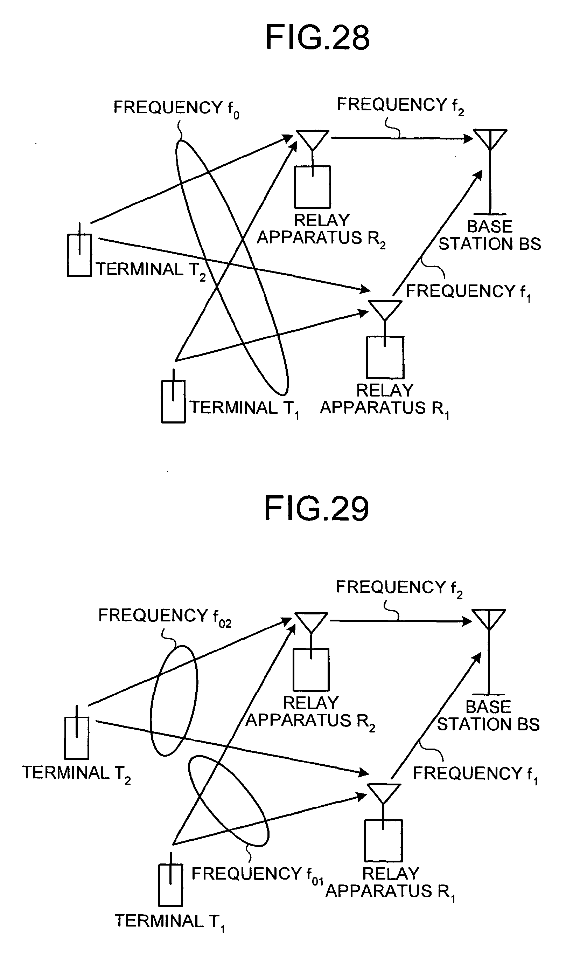

FIG. 27 is a mode of conventional relay transmission, and FIG. 28 is an example of multi-user relay transmission, which is a mode of relay transmission according to the present invention. FIG. 28 depicts the multi-user relay transmission explained in the eighth embodiment.
As shown in FIG. 27, in conventional relay transmission, when signals from a plurality of terminals $T_1$ and $T_2$ are amplified and transmitted, the signals are separately amplified and transmitted in different frequencies. In the example shown in FIG. 27, a signal transmitted from the terminal $T_1$ with the frequency $f_1$ is received by the relay apparatus $R_1$,

and a signal transmitted from the terminal $T_2$ with the frequency $f_2$ is received by the relay apparatus $R_2$, and these signals are individually relayed and transmitted in each frequency. As a result, a transmitted signal from the terminal $T_1$ is received only by the relay apparatus $R_1$, and signals from the terminal $T_1$ radiated to other areas become useless power. Likewise, a transmitted signal from the terminal $T_2$ is received only by the relay apparatus $R_2$, and signals from the terminal $T_2$ radiated to other areas become useless power.

On the other hand, in the multi-user relay transmission shown in FIG. 28, a plurality of terminals $T_1$ and $T_2$ transmit signals with the same frequency $f_0$. In this case, signals from the terminals $T_1$ and $T_2$ are received by the relay apparatuses $R_1$ and $R_2$. That is, in the multi-user relay transmission according to the present invention, the relay apparatuses $R_1$ and $R_2$ can receive the signal from the terminal $T_1$ and the signal from the terminal $T_1$ to the relay apparatus $R_2$, which has been uselessly radiated in conventional relay transmission, is amplified and transmitted to the base station BS via the relay apparatus $R_2$. The same applies to the signal from the terminal $T_2$.

As a result, the base station BS can collect more reception power. That is, it can be said that the multi-user relay transmission is a system in which the respective relay apparatuses $R_j$ present spatially receive the signals from the respective terminals $T_k$ and relay (amplify and transmit) the signals to the base station BS, and thus the base station BS can collect more power equivalently. The base station BS in-phase synthesizes signal components included in the signals received from a plurality of the relay apparatuses $R_j$ by using a reception weight. By this in-phase synthesis, only a desired signal component can be extracted with favorable quality, and transmission power of the terminal required for satisfying predetermined communication quality can be reduced. In addition, because signals from the plurality of terminals are multiplexed in a state close to an orthogonal state, the number of wireless resources to be required can be reduced.

It is also possible that signals from the terminal $T_1$ is received by the relay apparatuses $R_1$ and $R_2$ and relayed simultaneously to the base station BS with the same frequency, in conventional relay transmission. However, in the base station BS, a phase relation between a desired received signal from (or relayed by) the relay apparatus $R_1$ and a received desired signal from the relay apparatus $R_2$ becomes random. As a result, the desired signals cannot be in-phase synthesized, and power gain cannot be acquired. In conventional relay transmission, further, if received signals from the respective terminals are relayed by the relay apparatuses $R_1$ and $R_2$ in a different time slot, the base station BS can in-phase synthesize the desired signals received from the relay apparatuses $R_1$ and $R_2$. However, in this case, a plurality of time slots (in the number corresponding to the number of relay apparatuses) are consumed to relay one signal.

Therefore, in the multi-user relay transmission included in the relay transmission according to the present invention, high-quality signal transmission can be realized with less wireless resources than in conventional relay transmission. Further, the transmission power of the terminal required for maintaining predetermined quality can be reduced.

Further, in the conventional base station that does not use relay transmission, the number of signals that can be separated by the receiver is limited by the number of receiving antennas of the receiver. Therefore, the number of signals that can be transmitted simultaneously by one or a plurality of terminals with the same frequency is set to be equal to or less than the number of antennas in the base station. Further, in conventional relay transmission in which frequency conversion is not performed, for the base station to separate the relayed and transmitted signals, the number of signals that is transmitted simultaneously by one or a plurality of terminals with the same frequency needs to be equal to or less than the number of antennas in the base station. On the other hand, in the multi-user relay transmission according to the present invention, one or a plurality of terminals can multiplex signals larger than the number of antennas in the base station with the same frequency. This is because the relay apparatuses respectively convert the frequency to a different frequency from each other to transmit a signal to the base station, and thus the base station can separate the signals by using many received signals relayed and transmitted in the frequency domain.

At this time, the number of signals that can be separated by the base station is limited by the number of relay apparatuses. Therefore, the present embodiment demonstrates a significant effect, particularly when the number of relay apparatuses is large. Particularly, when the number of antennas of the relay apparatus is larger than that of the base station, an application effect thereof is very large.

As another viewpoint, the present embodiment can be understood as follows from an information theoretical aspect. An MIMO channel connects between the terminals and the relay apparatuses, which has a high Shannon's communication channel capacity. Therefore, signal transmission can be performed in one frequency. On the other hand, a transmission channel from the relay apparatus to the base station has a low Shannon's communication channel capacity, and thus it can be understood that the signals need to be multiplexed along a frequency axis. That is, the present embodiment describes a technique for smoothly separating and using a space domain and the frequency domain according to the Shannon's communication channel capacity of the channel from the terminal to the relay apparatus and the channel from the relay apparatus to the base station. There is no other relay transmission technique that can smoothly separate and use the space domain and the frequency domain, focusing on a difference in the Shannon's communication channel capacity between the channels, as far as the writer knows. The present embodiment discloses specific means (that is, adaptive arrangement of signals to the subband) for smoothly separating the space domain and the frequency domain according to a difference in the Shannon's communication channel capacity between the channel from the terminal to the relay apparatus and the channel from the relay apparatus to the base station.

Thirteenth embodiment.

A thirteenth embodiment is explained next. In the present embodiment, a modification of the multi-user relay transmission is explained. FIG. 29 depicts an example of relay transmission in the thirteenth embodiment and a mode of the multi-user relay transmission.

As described in the twelfth embodiment, one of the objects of the multi-user relay transmission is that more relay apparatuses receive signals transmitted from terminals, and amplify and transmit the signals, thereby enabling to collect more signal power in the base station. To achieve this object, terminals $T_1$ and $T_2$ do not necessarily need to transmit signals with the same frequency, and as shown in FIG. 29, such a configuration is possible that the terminals $T_1$ and $T_2$ transmit signals in different frequencies $f_{01}$ and $f_{02}$.

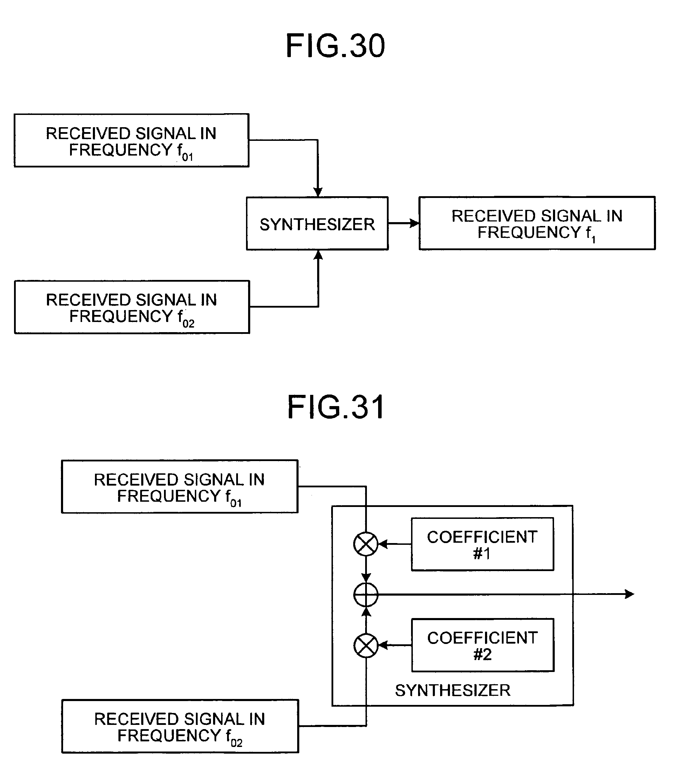

In the configuration shown in FIG. 29, the terminals $T_1$ and $T_2$ transmit signals, respectively, in different frequencies $f_{01}$ and $f_{02}$. Further, after having received the signals from the terminals $T_1$ and $T_2$ in frequencies $f_{01}$ and $f_{02}$, the relay apparatus $R_1$ synthesizes the received signals in frequencies $f_{01}$ and $f_{02}$ to generate a transmission signal. This operation is shown in FIG. 30. As shown in FIG. 30, the relay apparatus according to the present embodiment synthesizes signals received in a plurality of frequencies therein to generate a transmission signal in one frequency. Although an overall configuration of the relay apparatus is not shown in FIG. 30, for example, a received signal in each frequency output from the FFT unit 3 of the relay apparatus shown in FIG. 4 is used, to perform the operation shown in FIG. 30. A result thereof is input to the IFFT unit 6 as a transmission subcarrier.

As the transmission signal based on the above configuration is generated, respective relay apparatuses (the relay apparatuses $R_1$ and $R_2$) shown in FIG. 29 transmit the generated signals to the base station BS. At this time, the frequency of the signal transmitted by the relay apparatus $R_1$ is $f_1$, and the frequency of the signal transmitted by the relay apparatus $R_2$ is $f_2$. In signal transmission shown in FIG. 29, two signals from the terminals $T_1$ and $T_2$ are multiplexed; however, the base station BS can detect complex amplitude of signal components from the terminal $T_1$ (or the terminal $T_2$) included in the two signals from the relay apparatuses $R_1$ and $R_2$ based on a pilot signal. The base station BS can separately receive the signal components from the terminals $T_1$ and $T_2$ by using complex amplitude information.

In the present embodiment, the terminals $T_1$ and $T_2$ transmit signals in different frequencies; however, a synthesized signal obtained by synthesizing the signals in frequencies $f_{01}$ and $f_{02}$ by the relay apparatuses $R_1$ and $R_2$ are in the same format as that of the signal received by the relay apparatus according to the eighth embodiment. In other words, the difference between the present embodiment and the eighth embodiment is only such that the relay apparatus synthesizes the received signals from the terminals $T_1$ and $T_2$ in a reception circuit or signals from the terminals $T_1$ and $T_2$ are naturally synthesized in the space domain. Therefore, the synthesized signals acquired as a result have the same format, and signal transmission from the relay apparatus to the base station and extraction of signals in the base station can be realized according to the same configuration and principle as in the eighth embodiment.

To the best of the present inventor's knowledge, there is no other technique for synthesizing signals in a plurality of frequencies in the relay apparatus at present. Therefore, when the relay apparatus $R_1$ that performs conventional relay transmission shown in FIG. 27 attempts to amplify and transmit received signals in frequencies $f_{01}$ and $f_{02}$, two frequencies $f_{01}$ and $f_{02}$ (wireless resources) are required. Likewise, the relay apparatus $R_2$ that performs conventional relay transmission requires two frequencies. Therefore, in the case that both the relay apparatuses $R_1$ and $R_2$ that perform conventional relay transmission receive signals from the two terminals $T_1$ and $T_2$ and transmit the signals to the base station, four frequencies are required. On the other hand, in signal transmission from the relay apparatuses $R_1$ and $R_2$ to the base station BS in the present embodiment shown in FIG. 28, only two frequencies $f_1$ and $f_2$ are used, and thus many signal components can be sent to the base station BS with less wireless resources. Because the relay apparatus that performs conventional relay transmission does not perform frequency conversion, actually, the respective relay apparatuses use different time slots to ensure wireless resources required for relay transmission.

While there are various modes as the configuration of the synthesizer shown in FIG. 30, an example thereof is shown in FIG. 31. In FIG. 31, the synthesizer performs addition after multiplying signals received in two frequencies $f_1$ and $f_2$ by a coefficient #1 and a coefficient #2, respectively.

As the simplest configuration, a simple adding configuration (designating the coefficients #1 and #2 as 1 at all times) can be considered. As a more preferable configuration, such a configuration can be considered that the coefficients #1 and #2 random to each other are set for each relay apparatus to perform synthesis. In this case, because signals received in frequencies $f_{01}$ and $f_{01}$ are added in a random relative phase for each relay apparatus, signals from the terminals $T_1$ and $T_2$ are multiplexed in a random phase in the two frequencies received by the base station BS. Normally, if the relative phase of the signals from the terminals $T_1$ and $T_2$ is the same in the two frequencies received by the base station BS, reception using the MMSE synthesis or the like becomes difficult. On the other hand, if the relative phase of the signals from the terminals $T_1$ and $T_2$ is random in the two frequencies received by the base station BS, there is an advantage in that separation of two signals is facilitated by using the MMSE synthesis or the like.

In the present embodiment, an example in which signals transmitted from two terminals are relayed by two relay apparatuses is explained; however, the number of terminals and the number of relay apparatuses can be any number. That is, the present embodiment is characterized such that a plurality of terminals performs signal transmission in different frequencies, and the relay apparatus synthesizes and transmits signals received in different frequencies. Further, there is a significant effect such that a coefficient having a random phase is set to synthesize signals, thereby facilitating separation of signals in the base station.

Further, the frequencies $f_{01}$ and $f_{02}$ used by the terminals and the frequencies $f_1$ and $f_2$ used by the relay apparatuses can be same or different.

Fourteenth embodiment.

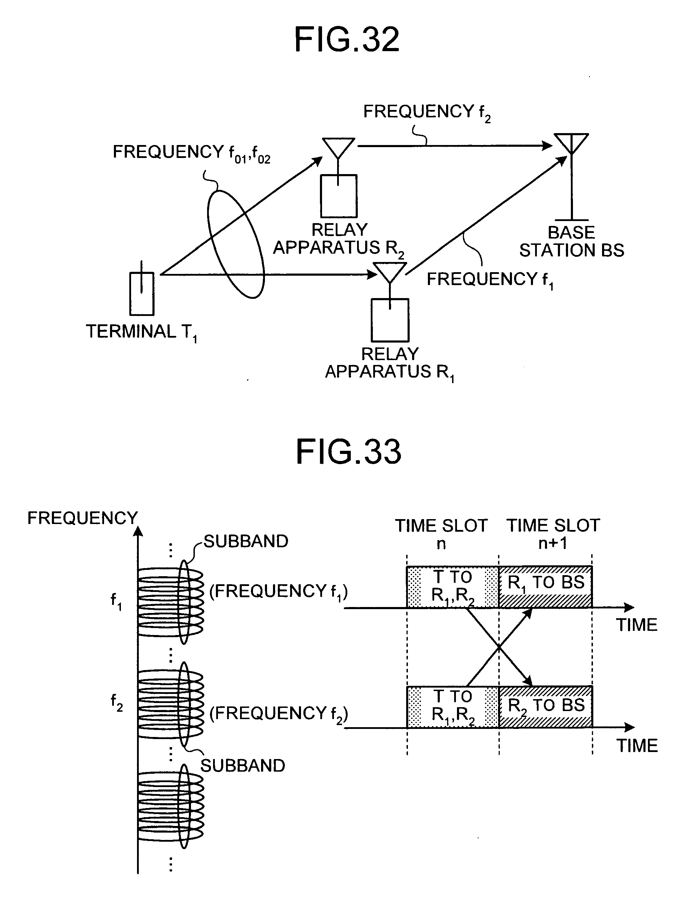

A fourteenth embodiment is explained next. In the present embodiment, a modification of the thirteenth embodiment is described. FIG. 32 depicts an example of relay transmission in the fourteenth embodiment and a mode of multi-user transmission. FIG. 33 is an example of a signal transmission operation in the wireless communication system in which relay transmission in the fourteenth embodiment is applied.

In the thirteenth embodiment, the case that a plurality of terminals transmit signal in different frequencies $f_{01}$ and $f_{02}$ is assumed. However, if the relay apparatuses $R_1$ and $R_2$ synthesize signals received in frequencies $f_{01}$ and $f_{02}$ in a relative phase different from each other, one terminal $T_1$ instead of the plurality of terminals can transmit signals simultaneously in different frequencies $f_{01}$ and $f_{02}$ as shown in FIG. 32. This is because the base station BS can separate signals transmitted in frequencies $f_{01}$ and $f_{02}$ by the terminal $T_1$ from signals received in frequencies $f_1$ and $f_2$. As in the thirteenth embodiment, when a coefficient having a random phase is used at the time of synthesizing the received signals by the relay apparatus, separation of signals in the base station BS is facilitated.

FIG. 33 depicts a state of signal transmission when $f_{01}=f_1$ and $f_{02}=f_2$ in the configuration shown in FIG. 32, and the terminal $T_1$ transmits a signal in the time slot n and the relay apparatuses $R_1$ and $R_2$ relay and transmit the signal in the time slot n+1. At this time, the respective relay apparatuses synthesize the signals received in frequencies $f_1$ and $f_2$ with a predetermined coefficient, and transmit the signals to the base station BS.

In this manner, such a configuration becomes possible that the relay apparatuses receive a plurality of signals transmitted in different frequencies from one terminal, synthesize the signals received in a plurality of frequencies to amplify and transmit the signals, and the base station extracts signals, using the signals received from the relay apparatuses. In this case, the base station can in-phase synthesize the respective signal components from the terminal, which are included in two signals from the relay apparatuses $R_1$ and $R_2$, by using an appropriate reception weight (for example, an MMSE synthesis weight), thereby enabling to effectively use the signals from the relay apparatuses $R_1$ and $R_2$. On the other hand, in conventional relay transmission, when having received a signal with the frequency $f_0$, the relay apparatuses $R_1$ and $R_2$ amplify and transmit the signal by using the same frequency $f_0$. At this time, because a relative phase relation between the signals transmitted from the relay apparatuses becomes random, and in-phase synthesis of the signals becomes difficult. As a result, amplitude with the frequency $f_0$ received by the base station largely fluctuates as in the multipath fading, and the stability of receiving characteristics is not ensured. In the method in the present embodiment, therefore, the respective signal components included in the two signals from the relay apparatuses $R_1$ and $R_2$ (from the terminal) are in-phase synthesized, thereby enabling to acquire favorable communication quality as compared with a case of applying conventional relay transmission.

In this manner, in the present embodiment, one terminal performs signal transmission in different frequencies, and the relay apparatus synthesizes and transmits signals received in different frequencies. Specifically, the relay apparatus sets a coefficient having a random phase to synthesize the signals, thereby enabling to acquire a significant effect such that separation of signals in the base station is facilitated.

Fifteenth embodiment.

A fifteenth embodiment is explained next. In the present embodiment, a control method of the gain to be used at the time of amplifying and transmitting signals by the relay apparatus is explained.

As described in the above embodiments, the relay apparatus R adjusts the transmission power by multiplying the received signal by the gain G and transmits the signal to the base station. If the equation (2) mentioned in the eighth embodiment is rewritten here, a received signal component $y_1(q)$ in the base station BS of the signal transmitted from the relay apparatus R is expressed by the following equation.

[Equation 13]

$$y_1(q) = h_{RB} \sqrt{G} \left( \sum_{k=1}^{K} h_{kR} \sqrt{P_k} s_k(q) + z_R(q) \right) + z_{B1}(q) \qquad (8)$$

$z_{B1}(q)$ and $z_R(q)$ are respectively interference noise components in the base station BS and the relay apparatus $R_j$, and have an average interference noise power $Z_{B1}(=E[|z_{B1}(q)|^2])$ and $ZR(=E[|z_R(q)|^2])$, respectively. Because a shoulder index (j) shown in the equation (2) is not the main subject of the present embodiment, it is omitted in the equation (8).

According to the equation (8), the SINR of a received signal $y_1(q)$ is improved as the gain G of the relay apparatus $R_j$ increases. However, even if the gain G is excessively increased, the reception SINR does not exceed $Pk|h_{kR}|^2/Z_R$, and the reception SINR in the relay apparatus becomes an upper limit of the reception SINR in the base station. That is, it is desired that the gain G of the relay apparatus is increased so that the reception SINR in the base station approaches $P_k|hk_R|^2/Z_R$. However, even if the gain G is increased further, the reception SINR in the base station is hardly improved, and unnecessary power that gives interference to peripheral communication is radiated (interference with other communication increases).

Therefore, in the present embodiment, a method of appropriately controlling the gain G by the relay apparatus is described, taking the relation described above into consideration. Gain control such that a ratio between amplification noise from the relay apparatus and noise power of the base station becomes c is aimed.

[Equation 14]

$$c = \frac{GZ_R |h_{RB}|^2}{Z_{B1}} \qquad (9)$$

When noise power $GZ_R|h_{RB}|^2$ from the relay apparatus is larger than noise power $Z_{B1}$ of the base station, it is expected that the reception SINR in the base station takes a value close to the reception SINR in the relay apparatus. Accordingly, it is desired to set c equal to or larger than 1.

To achieve the state in the equation (9), in the present embodiment, closed-loop control described below is performed between the relay apparatus and the base station. FIG. 34 depicts a control flow operation of the gain G.

15-1) The relay apparatus sets a predetermined gain (for example, the gain G held as an initial value or the gain G instructed by the base station beforehand), and amplifies the noise component in a signal with the gain G to transmit the signal to the base station.

15-2) The base station estimates the noise power $GZ_R|h_{RB}|^2$, which is the power of the signal transmitted from the relay apparatus.

15-3) The base station compares an equation (10) with c to determine the gain based on a comparison result, and transmits a control signal instructing an increase or decrease of the gain G to the relay apparatus.

[Equation 15]

$$\frac{GZ_R |h_{RB}|^2}{Z_{B1}} \qquad (10)$$

15-4) The relay apparatus changes the gain G according to the content of the received control signal from the base station.

The base station determines the gain G to be used by the respective relay apparatuses according to the control described above, and the respective relay apparatuses can use the gain G determined by the base station.

In the above procedure 15-2), for example, the base station can obtain the total received power including own noise, to estimate $GZ_R|h_{RB}|^2$ by subtracting the own noise power $Z_{B1}$ calculated beforehand from the obtained total received power.

As a method of informing the gain G from the base station to the relay apparatus, for example, in the above procedure 15-3), the base station informs the relay apparatus of a relative ratio r for changing the gain G indicated by the following equation, and the relay apparatus changes the gain G based on the relative ratio r in the above procedure 15-4).

[Equation 16]

$$r = c \bigg/ \frac{GZ_R \ |h_{RB}|^2}{Z_{B1}}$$

In the above procedure 15-3), when the equation (10) is larger (smaller) than c, a control signal for instructing to decrease (increase) the gain G by a predetermined amount ($\Delta$dB) is transmitted to the relay apparatus, and in the above procedure 15-4), the relay apparatus can change the gain G by the predetermined amount ($\Delta$dB) according to the content of the control signal.

Further, by replacing the above procedures 15-1) and 15-2) by the following procedures 15-1') and 15-2'), the noise component from the relay apparatus can be measured more efficiently.

15-1') The relay apparatus sets a predetermined gain G, amplifies a pilot signal with power $FZ_R$ by the gain G, and transmits the pilot signal to the base station, where F denotes a coefficient known between the relay apparatus and the base station.

15-2') The base station measures the power of the pilot signal transmitted from the relay apparatus and designates 1/F of the measured power as an estimated value of the noise power $GZ_R|h_{RB}|^2$.

In these procedures 15-1') and 15-2'), the relay apparatus transmits the pilot signal in a known pattern instead of amplifying the noise component. Because the pilot signal has the known pattern, the base station prepares a matched filter same as the pattern beforehand, and extracts the pilot signal by using the filter, thereby enabling more accurate power measurement than the case of using the procedures 15-1) and 15-2). The noise power of the relay apparatus is small in many cases, and in the procedure 15-2), a measurement error of the noise power $GZ_R|h_{RB}|^2$ in the base station BS can increase. To solve this problem, the relay apparatus transmits the pilot signal with power $FZ_R$. At this time, if a coefficient F is set larger than 1, the base station can measure received power stronger than the power $GZ_R|H_{RB}|^2$, thereby enabling to decrease the measurement error. In the procedure 15-2'), if the base station estimates 1/F of the measured power as the noise power $GZ_R|h_{RB}|^2$, the base station can obtain the noise power $GZ_R|h_{RB}|^2$ with less measurement error than in the case of directly obtaining the noise power by performing the procedure 15-2).

The above descriptions are summarized as follows. The control method of the gain G described in the present embodiment has a characteristic such that the closed-loop control is performed between the relay apparatus and the base station to set an appropriate gain G. At this time, feedback acknowledgement for changing the gain G is performed according to the relative relation between the noise power in the base station and the power from the relay apparatus. In a more preferable mode, the relay apparatus transmits a known pilot signal expressing the noise power to the base station. Further, as a preferable mode, the relay apparatus transmits a known pilot signal with transmission power at a certain ratio F with respect to the noise power. Particularly, when F>1, the base station can measure the noise power from the relay apparatus R more efficiently.

In the respective embodiments described above, the uplink in the wireless communication system is assumed; however, all the embodiments can be similarly applied to a downlink and a distributed wireless communication system. That is, in the respective embodiments, the uplink is only assumed as an example. The relay apparatus described in these embodiments can be any wireless apparatus including a terminal, a base station and the like. Particularly, in a Time Division Duplex (TDD) system, it is general that the terminal performs reception and transmission with the same frequency, and there is an advantage in that relay transmission can be performed, while effectively using a circuit function used for normal communication. Further, in a part of the embodiments, transmission from two terminals and two relay apparatuses are assumed; however, this is only an example for briefly explaining the principle. Persons skilled in the art can easily understand that the same principle can be applied to any number of terminals and relay apparatuses. Description of "frequency" used in the explanations of the respective embodiments can be replaced by "subcarrier", "subcarrier group", or "subband".

While multicarrier transmission has been assumed in the respective embodiments, these embodiments can be applied to a single-carrier transmission having a plurality of bands. Further, any mode of combining the first to fifteenth embodiments is included in the present invention.

INDUSTRIAL APPLICABILITY

As described above, the communication apparatus according to the present invention is useful for the wireless communication system, and particularly suitable for a case that in an environment in which a distance between a transmitter and a receiver is large and direct communication is difficult, a received signal from the transmitter is relayed and transmitted to the receiver to realize favorable communication.

EXPLANATIONS OF LETTERS OR NUMERALS

1    Low-noise amplifier (LNA)
2    AD converter (A/D)
3    FFT unit
4    Controller
5    Signal converter
6    IFFT unit
7    DA converter (D/A)
8    High-power amplifier (HPA)
51   Buffer
52   Frequency converter

**Claims**

1. A communication apparatus that constitutes a wireless communication system with a base station and a terminal station, and relays and transfers a signal transmitted and received between the base station and the terminal station, wherein
   when having received a signal transmitted from the base station or the terminal station, the communication apparatus uses a frequency different from that at a time of reception to amplify and transfer the received signal.

2. The communication apparatus according to claim 1, wherein the communication apparatus corresponds to multicarrier communication, and performs transfer processing, designating a continuous predetermined number of subcarriers as one processing target.

3. A wireless communication system constituted by a base station, a terminal station, and a relay apparatus that relays and transfers a signal transmitted and received between the base station and the terminal station, wherein
   when having received a signal transmitted from a first communication apparatus, which is the terminal station or the base station, the relay apparatus amplifies the received signal and transfers the amplified signal to a second communication apparatus, which is a destination thereof.

4. The wireless communication system according to claim 3, comprising the relay apparatus in plural, wherein
   the respective relay apparatuses sequentially receive signals continuously transmitted from the first communication apparatus with a specific frequency in each time slot, and transfer the signals in a time slot after a predetermined time period, based on a time slot in which the signals are received.

5. The wireless communication system according to claim 4, wherein the respective relay apparatuses transfer the signals in a time slot subsequent to a time slot in which the signals are received.

6. The wireless communication system according to claim 4, wherein the respective relay apparatuses use a common transmission frequency in the signal transfer processing.

7. The wireless communication system according to claim 4, wherein the respective relay apparatuses use a transmission frequency different from each other in the signal transfer processing.

8. The wireless communication system according to claim 3, comprising the relay apparatus in plural, wherein
   the first communication apparatus continuously transmits signals to the second communication apparatus,
   a first relay apparatus among the relay apparatuses transfers a signal transmitted from the first communication apparatus in a first time slot, which is a predetermined time slot, in a second time slot, which is a time slot subsequent to the first time slot, and
   a second relay apparatus different from the first relay apparatus among the relay apparatuses transfers a signal, which is transmitted from the first communication apparatus in the second time slot, in a time slot subsequent to the second time slot.

9. The wireless communication system according to claim 8, comprising at least one of the first relay apparatus and the second relay apparatus in plural.

10. The wireless communication system according to claim 4, wherein
    in a transfer operation performed by simultaneously using a plurality of relay apparatuses, an allocation pattern of a frequency used by the respective relay apparatuses is defined beforehand, and the respective relay apparatuses and a base station hold the allocation pattern,
    when a usable frequency is allocated to the respective relay apparatuses, the base station informs the respective relay apparatuses of a frequency allocation result with respect to a specific relay apparatus, and
    the relay apparatuses other than the specific relay apparatus among the respective relay apparatuses specify a frequency allocated to themselves based on the frequency allocation result with respect to the specific relay apparatus.

11. The wireless communication system according to claim 10, wherein
    when the base station is provided in plural,
    a different frequency allocation pattern is applied to each cell managed by each of the base stations.

12. The wireless communication system according to claim 3, wherein
    the relay apparatus includes a plurality of antennas, and
    the relay apparatus sequentially receives signals continuously transmitted from the first communication apparatus with a specific frequency in each time slot by using the respective antennas, and transfers the signals in a time slot after a predetermined time period, based on a time slot in which the signals are received.

13. The wireless communication system according to claim 12, wherein the relay apparatus transfers the signals in a time slot subsequent to a time slot in which the signals are received.

14. The wireless communication system according to claim 12, wherein the relay apparatus uses a common transmission frequency by the respective antennas.

15. The wireless communication system according to claim 12, wherein the relay apparatus uses a transmission frequency different from each other by the respective antennas.

16. The wireless communication system according to claim 3, wherein
    the relay apparatus includes a plurality of antennas,
    the first communication apparatus continuously transmits signals to the second communication apparatus, and
    the relay apparatus uses a first antenna among the antennas to transfer a signal transmitted in a first time slot, which is a predetermined time slot, from the first communication apparatus in a second time slot, which is a time slot subsequent to the first time slot, and uses a second antenna different from the first antenna among the antennas to transfer a signal transmitted in the second time slot from the first communication apparatus in a time slot subsequent to the second time slot.

17. The wireless communication system according to claim 16, comprising at least one of the first antenna and the second antenna in plural.

18. The wireless communication system according to claim 12, wherein
    in a transfer operation performed by simultaneously using the antennas included in the relay apparatus, an allocation pattern of a frequency used by the respective antennas is defined beforehand, and the relay apparatus and the base station hold the allocation pattern,

when a usable frequency is allocated to the relay apparatus, the base station informs the relay apparatus of a frequency allocation result with respect to a specific antenna, and

the relay apparatus specifies a frequency allocated to other antennas based on the frequency allocation result with respect to the specific antenna.

**19.** The wireless communication system according to claim 18, wherein
when the base station is provided in plural,
a different frequency allocation pattern is applied to each cell managed by each of the base stations.

**20.** The wireless communication system according to claim 3, wherein
the first communication apparatus multiplexes a plurality of signals including a known signal component by using a same frequency in a same time slot,
the relay apparatus transfers a received signal from the first communication apparatus to the second communication apparatus, and
the second communication apparatus separates respective multiplexed signals based on a known signal component included in the received signal from the relay apparatus.

**21.** The wireless communication system according to claim 3, wherein
the first communication apparatus transmits a plurality of signals including a known signal component by using a different frequency in a same time slot,
the relay apparatus synthesizes respective signals received from the first communication apparatus and transmits an acquired multiplexed signal to the second communication apparatus, and
the second communication apparatus separates respective multiplexed signals based on a known signal component included in the received signal from the relay apparatus.

**22.** The wireless communication system according to claim 3, wherein
a band including a first frequency band to be exclusively used by the first communication apparatus and a second frequency band to be exclusively used by the relay apparatus is designated as a system band, and
the base station individually manages the first frequency band and the second frequency band.

**23.** The wireless communication system according to claim 22, wherein
when the base station is provided in plural,
a repetitive pattern of a usable frequency allocated to each cell is set to be a pattern different between the first frequency band and the second frequency band.

**24.** The wireless communication system according to claim 22, wherein a usage frequency of a same frequency in a repetitive pattern of a usable frequency to be applied to the second frequency band is set higher than that of a same frequency in a repetitive pattern to be applied to the first frequency band.

**25.** The wireless communication system according to claim 3, wherein
when the terminal station is provided in plural,
the base station selects a terminal station to which a transmission permission is given in each time slot from the terminal stations, and
in a scheduling process at a time of selecting the terminal station to which a transmission permission is given,
each of the terminal stations transmits a sounding signal orthogonal to each other with a same frequency in a same time slot,
the relay apparatus transfers the sounding signal to the base station, and
the base station performs selection of the terminal station to which a transmission permission is given and allocation of wireless resources to a selected terminal station, based on the sounding signal transferred by the relay apparatus.

**26.** The wireless communication system according to claim 25, wherein the base station selects the terminal station to which a transmission permission is given based on a reception SINR of the sounding signal, and determines an MCS to be used at a time of transmission by the selected terminal station based on the reception SINR of the sounding signal transmitted by the terminal station.

**27.** The wireless communication system according to claim 26, wherein the base station selects terminal stations in a number, with which a system throughput becomes maximum, as terminal stations to which a transmission permission is given, sequentially from a terminal station having a largest reception SINR of the sounding signal.

**28.** The wireless communication system according to claim 25, wherein
when the relay apparatus is provided in plural,
each of the relay apparatuses transfers received sounding signals from the respective terminal stations in a same time slot by using a frequency different from each other.

**29.** The wireless communication system according to claim 25, wherein
when the relay apparatus includes a plurality of antennas,
the relay apparatus transfers received sounding signals from the respective terminal stations by the respective antennas, in a same time slot by using a frequency different from each other.

**30.** The wireless communication system according to any one of claims 3 to 29, wherein
the relay apparatus uses a gain instructed from the base station in the signal transfer process, and
in a process in which the base station controls the gain to be used in the signal transfer process by the relay apparatus, the relay apparatus amplifies a noise component included in the relay apparatus or a known component with a gain according to an instruction from the base station, and transmits an acquired amplified signal to the base station, and the base station determines a gain to be informed to the relay apparatus next time based on a reception SINR of the amplified signal transmitted from the relay apparatus.

# FIG.1

# FIG.2

# FIG.3

```
           ┌─────────────────────────┐
           │          START          │
           └─────────────────────────┘
                        │
                        ▼
  ┌──────────────────────────────────────────┐
  │ TERMINAL AND RELAY APPARATUS RECOGNIZE    │
  │    WIRELESS RESOURCES TO BE USED BY       │ ── S11
  │      EXCHANGE OF CONTROL SIGNALS          │
  └──────────────────────────────────────────┘
                        │
                        ▼
  ┌──────────────────────────────────────────┐
  │       TERMINAL TRANSMITS SIGNAL           │ ── S12
  └──────────────────────────────────────────┘
                        │
                        ▼
  ┌──────────────────────────────────────────┐
  │    RELAY APPARATUS CONVERTS RECEIVED      │
  │ SIGNAL TO SIGNAL IN ANOTHER FREQUENCY IN  │ ── S13
  │  MULTICARRIER BAND AND TRANSMITS SIGNAL   │
  └──────────────────────────────────────────┘
                        │
                        ▼
  ┌──────────────────────────────────────────┐
  │    BASE STATION RECEIVES SIGNAL FROM      │ ── S14
  │             RELAY APPARATUS               │
  └──────────────────────────────────────────┘
                        │
                        ▼
  ┌──────────────────────────────────────────┐
  │ BASE STATION IMPROVES SIGNAL QUALITY BY   │
  │ USING SIGNAL RECEIVED FROM TERMINAL AND   │ ── S15
  │ SIGNAL RECEIVED FROM RELAY APPARATUS      │
  └──────────────────────────────────────────┘
                        │
                        ▼
           ┌─────────────────────────┐
           │           END           │
           └─────────────────────────┘
```

# FIG.4

# FIG.5

# FIG.6

# FIG.7

# FIG.8

FREQUENCY

SUBBAND

TERMINAL T
(FREQUENCY $f_0$)

$f_0$

RELAY
APPARATUS $R_1$
(FREQUENCY $f_1$)

$f_1$

SUBBAND

RELAY APPARATUS
$R_2$
(FREQUENCY $f_2$)

$f_2$

TIME SLOT
n

TIME SLOT
n+1

T TO
$R_1,R_2,BS$

TIME

$R_1$ TO BS

TIME

$R_2$ TO BS

TIME

# FIG.9

FREQUENCY

SUBBAND

TERMINAL T
(FREQUENCY $f_0$)

$f_0$

RELAY APPARATUS
$R_1$
ANTENNA #1
(FREQUENCY $f_1$)

$f_1$

SUBBAND

RELAY APPARATUS
$R_2$
ANTENNA #2
(FREQUENCY $f_2$)

$f_2$

TIME SLOT
n

TIME SLOT
n+1

T TO
$R_1,BS$

TIME

$R_1$(ant#1)
TO BS

TIME

$R_1$(ant#2)
TO BS

TIME

# FIG.10

WIRELESS RESOURCES USED BY TERMINAL FOR SIGNAL TRANSMISSION

WIRELESS RESOURCES USED BY RELAY APPARATUS FOR SIGNAL TRANSMISSION

$f_0$    $f_1$    $f_2$    $f_3$    $f_4$    FREQUENCY

FREQUENCY BAND $B_T$

FREQUENCY BAND $B_R$

# FIG.11

WIRELESS RESOURCES USED BY TERMINAL FOR SIGNAL TRANSMISSION

TIME SLOT FOR TERMINAL

TIME

TIME SLOT FOR RELAY APPARATUS

TIME

WIRELESS RESOURCES USED BY RELAY APPARATUS FOR SIGNAL TRANSMISSION

FREQUENCY

# FIG.12

USABLE AREA OF FREQUENCY BAND B_T BY TERMINAL

USABLE AREA OF FREQUENCY BAND B_R BY
RELAY APPARATUS

# FIG.13

# FIG.14

| RECEPTION SUBBAND (s1) IN TIME SLOT n <br><br> TRANSMISSION SUBBAND (s2) IN TIME SLOT n+1 | #1 | #2 | #3 |
|---|---|---|---|
| #11 | RELAY APPARATUS ID($R_1$) | 0 | 0 |
| #12 | 0 | RELAY APPARATUS ID($R_2$) | 0 |
| #13 | 0 | 0 | RELAY APPARATUS ID($R_3$) |

# FIG.15

| RECEPTION SUBBAND (s1) IN TIME SLOT n <br><br> TRANSMISSION SUBBAND (s2) IN TIME SLOT n+1 | #1 | #2 | #3 |
|---|---|---|---|
| #11 | RELAY APPARATUS ID($R_1$) | 0 | 0 |
| #12 | 0 | RELAY APPARATUS ID($R_1$) | 0 |
| #13 | 0 | 0 | RELAY APPARATUS ID($R_1$) |

# FIG.16

| RECEPTION SUBBAND (s1) IN TIME SLOT n / TRANSMISSION SUBBAND (s2) IN TIME SLOT n+1 | #1 | #2 | #3 |
|---|---|---|---|
| #11 | RELAY APPARATUS ID($R_1$) | 0 | 0 |
| #12 | RELAY APPARATUS ID($R_2$) | 0 | 0 |
| #13 | RELAY APPARATUS ID($R_3$) | 0 | 0 |

# FIG.17

| RECEPTION SUBBAND (s1) IN TIME SLOT n / TRANSMISSION SUBBAND (s2) IN TIME SLOT n+1 | #1 | #2 | #3 |
|---|---|---|---|
| #11 | RELAY APPARATUS ID($R_1$,$R_2$) | 0 | 0 |
| #12 | 0 | 0 | 0 |
| #13 | 0 | 0 | 0 |

# FIG.18

SOUNDING SIGNAL ▨  DATA SIGNAL ▦

# FIG.19

# FIG.20

$\longrightarrow$ TIME SLOT n

$\cdots\cdots\blacktriangleright$ TIME SLOT n+1 FREQUENCY $f_1$

$-\, -\, \blacktriangleright$ TIME SLOT n+1 FREQUENCY $f_j$

TERMINAL $T_k$

$h_{kR}^{(1)}$

RELAY APPARATUS $R_1$

$h_{kR}^{(j)}$   $h_{kB}$

$h_{RB}^{(1)}$

TERMINAL $T_1$

$h_{1R}^{(1)}$

$h_{1B}$

BASE STATION BS

$h_{1R}^{(j)}$

$h_{RB}^{(j)}$

RELAY APPARATUS $R_j$

# FIG.21

DATA SIGNAL OF TERMINAL $T_1$ ▨

DATA SIGNAL OF TERMINAL $T_k$ ▨

TIME SLOT n    TIME SLOT n+1

TERMINAL $T_1, T_k$ (FREQUENCY $f_0$)

TIME

RELAY APPARATUS $R_1$ (FREQUENCY $f_1$)

TIME

RELAY APPARATUS $R_2$ (FREQUENCY $f_2$)

TIME

# FIG.22

DATA SIGNAL OF
TERMINAL $T_1$

DATA SIGNAL OF
TERMINAL $T_k$

TIME SLOT
n

TIME SLOT
n+1

TIME SLOT
n+2

TERMINAL $T_1$,$T_k$
(FREQUENCY $f_0$)

TIME

RELAY
APPARATUS $R_1$
(FREQUENCY $f_0$)

TIME

RELAY
APPARATUS $R_2$
(FREQUENCY $f_0$)

TIME

# FIG.23

RELAY
APPARATUS $R_2$

BASE
STATION BS

TERMINAL $T_2$

RELAY
APPARATUS $R_1$

TERMINAL $T_1$

# FIG.24

FREQUENCY $f_1$ IN TIME SLOT n+1 OR
FREQUENCY $f_0$ IN TIME SLOT n+2

FREQUENCY $f_0$ IN TIME SLOT n

RELAY
APPARATUS $R_2$

BASE
STATION BS

FREQUENCY $f_0$ IN
TIME SLOT n+1

TERMINAL $T_2$

TERMINAL $T_1$   RELAY
APPARATUS $R_1$

# FIG.25

RELAY
APPARATUS
$R_4$

BASE
STATION BS

RELAY
APPARATUS $R_2$

RELAY
APPARATUS $R_3$

TERMINAL $T_2$

RELAY
APPARATUS $R_1$

TERMINAL $T_1$

# FIG.26

SOUNDING SIGNAL ▨  DATA SIGNAL ▨ ▨

# FIG.27

# FIG.28

FREQUENCY $f_0$
FREQUENCY $f_2$

RELAY
APPARATUS $R_2$

BASE
STATION BS

TERMINAL $T_2$

FREQUENCY $f_1$

TERMINAL $T_1$
RELAY
APPARATUS $R_1$

# FIG.29

FREQUENCY $f_2$

FREQUENCY $f_{02}$

RELAY
APPARATUS $R_2$

BASE
STATION BS

TERMINAL $T_2$

FREQUENCY $f_1$

FREQUENCY $f_{01}$
RELAY
APPARATUS $R_1$

TERMINAL $T_1$

# FIG.30

```
┌─────────────────────┐
│  RECEIVED SIGNAL IN │
│  FREQUENCY f₀₁      │──────────┐
└─────────────────────┘          │
                                 ▼
                        ┌─────────────┐      ┌─────────────────────┐
                        │ SYNTHESIZER │─────▶│  RECEIVED SIGNAL IN │
                        └─────────────┘      │  FREQUENCY f₁       │
                                 ▲           └─────────────────────┘
┌─────────────────────┐          │
│  RECEIVED SIGNAL IN │──────────┘
│  FREQUENCY f₀₂      │
└─────────────────────┘
```

# FIG.31

# FIG.32

# FIG.33

# FIG.34

(15-4)
CHANGE GAIN

(15-1)
TRANSMIT NOISE SIGNAL

(15-2)
ESTIMATE NOISE
POWER FROM
RELAY APPARATUS

(15-3)
INFORM CHANGE OF GAIN

RELAY
APPARATUS

BASE STATION

# FIG.35

$h_{TR}$

R

$h_{RB}$

T

$h_{TB}$

BS

TIME SLOT n          TIME SLOT n+1

| T TO R, BS | R TO BS | TIME |
|------------|---------|------|

# FIG.36

| TIME SLOT n | TIME SLOT n+1 | TIME SLOT n+2 |
|---|---|---|
| T TO R, BS | $R_1$ TO BS | $R_2$ TO BS |

TIME

<table>
<tr><td colspan="2">**INTERNATIONAL SEARCH REPORT**</td><td>International application No.<br>PCT/JP2009/061237</td></tr>
</table>

A.  CLASSIFICATION OF SUBJECT MATTER
H04B7/15(2006.01)i, H04B7/02(2006.01)i, H04B7/06(2006.01)i, H04B7/12
(2006.01)i, H04J1/00(2006.01)i, H04J3/00(2006.01)i, H04J11/00(2006.01)i,
H04W16/26(2009.01)i, H04W72/04(2009.01)i
According to International Patent Classification (IPC) or to both national classification and IPC

B.  FIELDS SEARCHED

Minimum documentation searched (classification system followed by classification symbols)
H04B7/15, H04B7/02, H04B7/06, H04B7/12, H04J1/00, H04J3/00, H04J11/00,
H04W16/26, H04W72/04

Documentation searched other than minimum documentation to the extent that such documents are included in the fields searched
    Jitsuyo Shinan Koho        1922-1996   Jitsuyo Shinan Toroku Koho   1996-2009
    Kokai Jitsuyo Shinan Koho  1971-2009   Toroku Jitsuyo Shinan Koho   1994-2009

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>Y | JP 2006-197488 A  (Toshiba Corp.),<br>27 July, 2006 (27.07.06),<br>Par. Nos. [0013] to [0022]; Figs. 1, 2<br>(Family: none) | 1,3<br>2 |
| Y | JP 04-037322 A  (Fujitsu Ltd.),<br>07 February, 1992 (07.02.92),<br>Page 2, upper right column, line 2 to lower<br>left column, line 19; Fig. 3<br>(Family: none) | 2 |
| Y | JP 04-291831 A  (Fujitsu Ltd.),<br>15 October, 1992 (15.10.92),<br>Par. No. [0009]; Fig. 1<br>(Family: none) | 2 |

☐  Further documents are listed in the continuation of Box C.          ☐  See patent family annex.

| | | |
|---|---|---|
| * | Special categories of cited documents: | "T" | later document published after the international filing date or priority date and not in conflict with the application but cited to understand the principle or theory underlying the invention |
| "A" | document defining the general state of the art which is not considered    to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

Date of the actual completion of the international search
    07 September, 2009 (07.09.09)

Date of mailing of the international search report
    15 September, 2009 (15.09.09)

Name and mailing address of the ISA/
    Japanese Patent Office

Authorized officer

Facsimile No.

Telephone No.

Form PCT/ISA/210 (second sheet) (April 2007)

## INTERNATIONAL SEARCH REPORT

| | International application No. |
|---|---|
| | PCT/JP2009/061237 |

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:

    See extra sheet.

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☒ No required additional search fees were timely paid by the applicant.    Consequently, this international search report is restricted to the invention first mentioned in the claims; it is covered by claims Nos.: 1-3 .

**Remark on Protest**
the

☐ The additional search fees were accompanied by the applicant's protest and, where applicable, payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2007)

**INTERNATIONAL SEARCH REPORT**

International application No.

PCT/JP2009/061237

Continuation of Box No.III of continuation of first sheet(2)

Document 1: JP 2006-197488 A (Toshiba Corp.), 27 July, 2006 (27.07.06), paragraphs [0013]-[0022], Figs. 1 and 2

Since the document 1 describes that a relay station which carries out a relay operation between a base station and a terminal station uses a frequency different from a frequency at the time of reception and carries out amplification followed by transmission, the invention in claim 1 is deemed not to have the novelty in the light of the invention described in the document 1 and thus does not have the special technical feature.

Thus, the special technical features of claim 2 dependent on claim 1, claim 3 and claims 4 through 30 dependent on claim 3 will be judged below at the time of an order for the payment of additional search fees.

The following ten inventions which are linked by the respective special technical features below are included.

The invention in claim 1 without the special technical feature is categorized into invention 1.

Since the invention in claim 3 merely claims the invention in claim 1 as a wireless communication system and a new effect is not obtained therefrom, the invention in claim 3 is categorized into invention 1.

On the other hand, as set forth later, since the invention in claim 30 has less technical relevancy and relevancy in subject matter to the invention in claim 3, the invention in claim 30 cannot be categorized into invention 1.

(Invention 1) The inventions in claims 1, 2 and 3

A communication device "that, when receiving the signal transmitted from the base station or the terminal station, uses a frequency different from a frequency at the time of the receiving, amplifies the received signal and transfers the same."

(Invention 2) The inventions in claims 4-7, 10 and 11

A wireless communication system "provided with a plurality of relay devices, wherein each relay device receives a signal continuously transmitted at a specific frequency from the first communication device in order of a time slot, transfers the signal at the time slot after a fixed time from the received time slot as a standard."

(Invention 3) The inventions in claims 8 and 9

A wireless communication system "provided with a plurality of relay devices, wherein the first communication device continuously transmits a signal to the second communication device, a first relay device out of the plurality of the relay devices transfers, at a second time slot that is a subsequent time slot of a first time slot, the signal transmitted from the first communication device at the first time slot that is a predetermined time slot, and a second relay device different from the first relay device out of the plurality of the relay devices transfers, at a subsequent time slot of the second time slot, the signal transmitted from the first communication device at the second time slot."

(continued to next extra sheet)

(Invention 4) The inventions in claims 12-15, 18 and 19
A wireless communication system "in which the relay devices are provided with a plurality of antennas, wherein the relay device uses each antenna to receive a signal continuously transmitted at a specific frequency from the first communication device in order of a time slot and transfers the signal at the time slot after a fixed time from the time slot at which the signal was received as a standard."

(Invention 5) The inventions in claims 16 and 17
A wireless communication system "wherein a relay device" "uses a different transmission frequency for each antenna."

(Invention 6) The invention in claim 20
A wireless communication system "in which the first communication device uses the same frequency at the same time slot to carry out a multiplex transmission of a plurality of signals containing a known signal component, the relay device transfers a received signal from the first communication device to the second communication device, and the second communication device separates each multiplexed signal in accordance with the known signal component contained in the received signal from the relay device."

(Invention 7) The invention in claim 21
A wireless communication system "in which the first communication device uses the same frequency at the same time slot to transmit a plurality of signals containing a known signal component, the relay device synthesizes each received signal from the first communication device to transmit an obtained multiplexed signal to the second communication device, and the second communication device separates each multiplexed signal in accordance with the known signal component contained in the received signal from the relay device."

(Invention 8) The inventions in claims 22-24
A wireless communication system "in which the system band is set to a band comprised of a first frequency band exclusively used by the first communication device and a second frequency band exclusively used by the relay device and the base station individually manages the first frequency band and the second frequency band."

(Invention 9) The inventions in claims 25-29
A wireless communication system "in which, when the wireless communication system is provided with a plurality of terminal stations, the base station selects a terminal station out of the plurality of the terminal stations, wherein the selected terminal station is allowed to carry out transmission at each time slot, the terminal stations each transmit respectively orthogonal sounding signals at the same frequencies of the same time slots in scheduling processing for the selection of the terminal station to be permitted transmission, the relay device transfers the sounding signals to the base station, the base station selects a terminal station to be permitted transmission in accordance with the sounding signals transferred by the relay device and allocates wireless resources to the selected terminal station."

Form PCT/ISA/210 (extra sheet) (April 2007)

**INTERNATIONAL SEARCH REPORT**

International application No.

PCT/JP2009/061237

(Invention 10) The invention in claim 30

A wireless communication system "in which a relay device uses an amplification factor instructed by the base station in the signal transfer processing, amplifies its own noise component or known component with the amplification factor instructed by the base station in the processing where the base station controls an amplification factor that the relay device uses in the signal transfer processing, and transmits a signal obtained after the amplification to the base station; and the base station determines, on the basis of a reception SINR of the amplified signal transmitted by the relay device, an amplification factor that the base station notifies the relay device of at the next time."

Additionally, a technical feature added to the invention in claim 30 is set forth above but a technical feature in claim 3 is that, "when" a relay device "receives a signal transmitted from the base station or the terminal device, the relay device uses a frequency different from the frequency at the time of the receiving and transfers the received signal after the amplification thereof", so that a technical relevancy between both of the inventions is low. Further, it is grasped from the technical feature of the invention in claim 30 "that the SINR of a received signal yl(q) improves as an amplification factor G of a relay device (Rj) becomes larger. Even if the amplification factor G is made excessively large, however, the reception SINR does not exceed (Pk│hkR│2/ZR). Thus, the reception SINR of the relay device becomes the upper limit of the reception SINR of the base station. That is to say, although it is desirable to make the amplification factor G of a relay device large to the extent that the reception SINR of a base station is close to (Pk│hkR│2/ZR). Even if the amplification factor G is equal to or larger than that extent, the improvement of the reception SINR is little and such an arrangement results in the radiation of unnecessary electric power which interferes with peripheral communication." The problem set forth so far is little relevant to a problem grasped from the technical feature of the invention in claim 3 "in which a position of a terminal device is quite different from a position of a relay device, so that an interference electric power level received at neighboring cells greatly fluctuates at each time slot. As a result, the interference electric power level measured at neighboring cells is not stabilized, so that it becomes difficult for the neighboring cells to manage frequency resources such as frequency allocations". Thus, the invention in claim 30 cannot be categorized into invention 1.

Form PCT/ISA/210 (extra sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. Laneman ; D. Tse ; G. Wornell.** Cooperative diversity in wireless networks: efficient protocols and outage behavior. *IEEE Trans. Inform. Theory,* December 2004, vol. 50, 3062-3080

- Amplify-and-Forward Cooperative Transmission with Multiple Relays Using Phase Feedback. **Dongwoo Lee ; Young Seok Jung ; Jae Hong Lee.** IEEE Proc. of Vehicluar Technology Conference. VTC-2006 Fall, September 2006